# EUROPEAN PATENT APPLICATION

(11) **EP 4 597 348 A1**
(43) Date of publication of application: **06.08.2025**
(21) Application number: 23871570.0
(22) Date of filing: 21.08.2023
(51) Int. Cl.: G06F 21/64

(54) **INFORMATION CREATION METHOD, IMAGE FILE, INFORMATION CREATION DEVICE, AND PROGRAM**

(30) Priority: 29.09.2022 JP 2022156886
(71) Applicant: FUJIFILM Corporation, Tokyo 106-8620 (JP)
(72) Inventor: KOBAYASHI, Masaru, Saitama-shi, Saitama 331-9624 (JP); YAMAJI, Kei, Saitama-shi, Saitama 331-9624 (JP); KOBAYASHI, Toshiki, Saitama-shi, Saitama 331-9624 (JP); NISHIO, Yuya, Saitama-shi, Saitama 331-9624 (JP)
(74) Representative: Dehns Germany Partnerschaft mbB
(86) International application number: PCT/JP2023/029986
(87) International publication number: WO 2024/070328

(57) **Abstract**

An information creation method includes an acquisition step of acquiring relevant information related to image data, an encryption step of generating first encryption information by encrypting the relevant information, and an accessory step of attaching the first encryption information to the image data as accessory information. The accessory information includes period information, which is related to a period in which the first encryption information is generated, or reliability information.

## Description

### BACKGROUND OF THE INVENTION

### 1. Field of the Invention

The technology of the present disclosure relates to an information creation method, an image file, an information creation apparatus, and a program.

### 2. Description of the Related Art

JP2006-345450A discloses an image verification system including an imaging apparatus that performs tampering prevention processing on an image file including an image to be captured and accessory information thereof, and an image verification apparatus that verifies that the image file is not tampered with. In the image verification system described in JP2006-345450A, the imaging apparatus includes a user interface providing unit that provides a user interface for causing a user to select an item to be subjected to the tampering prevention processing in the accessory information, an encryption unit that creates encrypted accessory information obtained by encrypting the accessory information selected by the user interface, and an addition unit that adds the encrypted accessory information to the image file to create an added image file. In the image verification system disclosed in JP2006-345450A, the image verification apparatus includes a decryption unit that decrypts the encrypted accessory information to create decrypted accessory information, and a collation unit that collates each item of the decrypted accessory information with each item of the corresponding accessory information.

JP2009-225229A discloses an imaging apparatus including an imaging element that images a subject and outputs image data, and a condition acquisition unit that acquires an imaging condition during the imaging. The imaging apparatus disclosed in JP2009-225229A includes a generation unit that generates first imaging information and second imaging information, which is more detailed than the first imaging information, based on the imaging condition acquired by the condition acquisition unit, a conversion unit that converts the second imaging information into encrypted third imaging information, and a unit that generates an image file, which is obtained by adding the first imaging information and the third imaging information to the image data, and records the image file in a recording medium.

JP2016-122917A discloses a signature generation apparatus. The signature generation apparatus disclosed in JP2016-122917A includes a data acquisition unit that acquires a plurality of pieces of data including first data related to each other, and a signature generation unit that generates, based on the first data, correlation information indicating a correlation between the plurality of pieces of data, and a signature key, first signature data for the first data and the correlation information.

### SUMMARY OF THE INVENTION

One embodiment according to the technology of the present disclosure provides an information creation method, an image file, an information creation apparatus, and a program capable of improving security of relevant information related to image data.

A first aspect according to the technology of the present disclosure is an information creation method comprising an acquisition step of acquiring relevant information related to image data, an encryption step of generating first encryption information by encrypting the relevant information, and an accessory step of attaching accessory information directly or indirectly to the image data. The accessory information includes the first encryption information and period information, which is related to a period in which the first encryption information is generated, or reliability information.

A second aspect according to the technology of the present disclosure is an image file comprising accessory information of image data. The accessory information includes first encryption information obtained by encrypting relevant information related to the image data, and period information, which is related to a period in which the first encryption information is generated, or reliability information.

A third aspect according to the technology of the present disclosure is an information creation apparatus comprising a processor. The processor is configured to acquire relevant information related to image data, generate first encryption information by encrypting the relevant information, and attach accessory information directly or indirectly to the image data, and the accessory information includes the first encryption information and period information, which is related to a period in which the first encryption information is generated, or reliability information.

A fourth aspect according to the technology of the present disclosure is a program for causing a computer to execute a process, the process comprising an acquisition step of acquiring relevant information related to image data, an encryption step of generating first encryption information by encrypting the relevant information, and an accessory step of attaching accessory information directly or indirectly to the image data. The accessory information includes the first encryption information and period information, which is related to a period in which the first encryption information is generated, or reliability information.

### BRIEF DESCRIPTION OF THE DRAWINGS

Fig. 1 is a conceptual diagram showing an example of an aspect in which an imaging apparatus is used.
Fig. 2 is a conceptual diagram showing an example of a relationship between the imaging apparatus and a reception apparatus.
Fig. 3 is a block diagram showing an example of a hardware configuration of an electric system of the imaging apparatus and a function of a main unit thereof.
Fig. 4 is a block diagram showing an example of a hardware configuration of an electric system of the reception apparatus and a function of a main unit thereof.
Fig. 5 is a conceptual diagram showing an example of a correlation between an image sensor, a distance-measuring sensor, an electronic compass, an NVM, a GNSS device, a network, and an acquisition unit.
Fig. 6 is a conceptual diagram showing an example of a correlation between the acquisition unit and an association unit.
Fig. 7 is a conceptual diagram showing an example of a correlation between the NVM, the association unit, and an encryption unit.
Fig. 8A is a conceptual diagram showing an example of a processing content in a case where metadata is directly attached to image data.
Fig. 8B is a conceptual diagram showing an example of a processing content in a case where the metadata is indirectly attached to the image data.
Fig. 9 is a conceptual diagram showing an example of a correlation between a transmission unit and a reception unit.
Fig. 10 is a conceptual diagram showing an example of a correlation between a reception unit and a generation unit.
Fig. 11 is a conceptual diagram showing an example of a correlation between the reception unit, the generation unit, and a comparison unit.
Fig. 12 is a conceptual diagram showing an example of a correlation between the reception unit, the comparison unit, and an execution unit.
Fig. 13 is a flowchart showing an example of a flow of image file creation processing according to a first embodiment.
Fig. 14 is a flowchart showing an example of a flow of image file reception processing according to the first embodiment.
Fig. 15 is a functional block diagram showing an example of a function of a processor included in the imaging apparatus according to a second embodiment.
Fig. 16 is a conceptual diagram showing an example of a correlation between a UI system device, the network, the acquisition unit, and an editing unit.
Fig. 17 is a conceptual diagram showing an example of a correlation between the acquisition unit and the association unit.
Fig. 18 is a conceptual diagram showing an example of a correlation between the NVM, the association unit, and the encryption unit.
Fig. 19 is a flowchart showing an example of a flow of the image file creation processing according to the second embodiment.
Fig. 20 is a conceptual diagram showing a modification example of second association information.
Fig. 21 is a conceptual diagram showing an example of a relationship between the imaging apparatus, an editing apparatus, and the reception apparatus.
Fig. 22 is a conceptual diagram showing an example of a correlation between the association unit, the encryption unit, the transmission unit, an accessory unit, the network, and a storage apparatus.
Fig. 23 is a conceptual diagram showing a modification example of a content of the metadata included in the image file.
Fig. 24 is a conceptual diagram showing an example of a processing content of the comparison unit.
Fig. 25 is a conceptual diagram showing a modification example of first association information.
Fig. 26 is a conceptual diagram showing an example of a processing content in which the encryption unit generates fourth association information.
Fig. 27 is a conceptual diagram showing an example of a processing content in which the encryption unit generates fifth association information.
Fig. 28 is a conceptual diagram showing a form example in which an external apparatus performs the image file creation processing in response to a request from the imaging apparatus and the imaging apparatus receives a processing result.

### DESCRIPTION OF THE PREFERRED EMBODIMENTS

Hereinafter, examples of embodiments of an information creation method, an image file, an information creation apparatus, and a program according to the technology of the present disclosure will be described with reference to accompanying drawings.

### [First Embodiment]

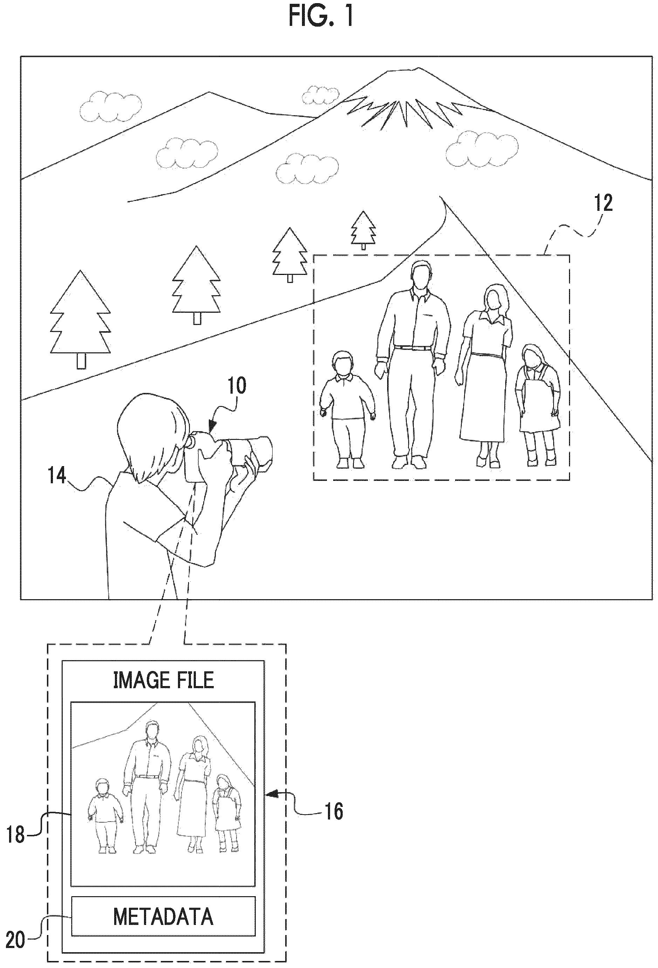

As shown in Fig. 1 as an example, an imaging apparatus 10 images an imaging target region 12 designated as a subject. The imaging target region 12 is decided by an angle of view designated by a user of the imaging apparatus 10 (hereinafter referred to as "user"). In the example shown in Fig. 1, the imaging target region 12 includes a plurality of persons, a road, and the like. The imaging apparatus 10 is an example of "information creation apparatus" according to the technology of the present disclosure.

The imaging apparatus 10 images the imaging target region 12 in response to an instruction provided from an imaging person 14 to generate an image file 16. An example of a file format of the image file 16 includes a joint photographic experts group (JPEG) or a tag image file format (TIFF). The image file 16 includes image data 18 indicating an image in which the imaging target region 12 is captured, and metadata 20 for the image data 18. The metadata 20 is attached to the image data 18. An example of a format of the metadata 20 includes exchangeable image file format (EXIF).

In the present first embodiment, the image file 16 is an example of "image file" according to the technology of the present disclosure. Further, the image data 18 is an example of "image data" according to the technique of the present disclosure. Furthermore, the metadata 20 is an example of "accessory information" according to the technology of the present disclosure.

The imaging apparatus 10 is a digital camera for consumer use. An example of the digital camera for consumer use includes a lens-interchangeable digital camera or a lens-fixed digital camera. The digital camera for consumer use is merely an example. The present disclosure is also satisfied even in a case where the imaging apparatus 10 is a digital camera for industrial use. Further, the technology of the present disclosure is also satisfied even in a case where the imaging apparatus 10 is an imaging apparatus mounted on various electronic apparatuses, such as a drive recorder, a smart device, a wearable terminal, a cell observation device, an ophthalmic observation device, and a surgical microscope. Further, the technology of the present disclosure is also satisfied even in a case where the imaging apparatus 10 is an imaging apparatus mounted on various modalities, such as an endoscope apparatus, an ultrasound diagnostic apparatus, an X-ray imaging apparatus, a computed tomography (CT) apparatus, and a magnetic resonance imaging (MRI) apparatus.

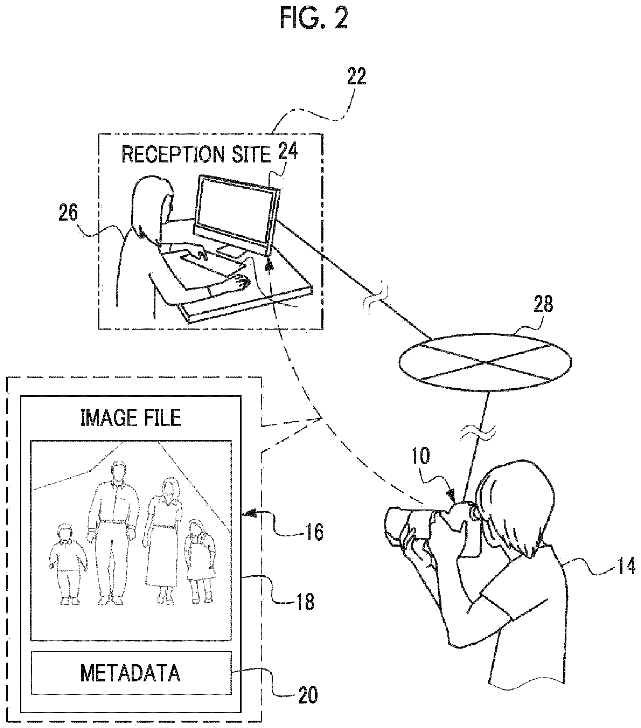

As shown in Fig. 2 as an example, the image file 16 is sent from the imaging person 14 to a reception site 22. A reception apparatus 24 is installed in the reception site 22. An example of the reception apparatus 24 includes a personal computer. The reception apparatus 24 is used by a recipient 26 at the reception site 22. The recipient 26 receives the image file 16 sent from the imaging person 14 via the reception apparatus 24.

Here, although an example of the reception apparatus 24 includes the personal computer, this is merely an example, and the reception apparatus 24 may be a smart device, a server, or the like.

The image file 16 is delivered via a network 28. An example of the network 28 includes a wide area network (WAN) or a local area network (LAN). The imaging apparatus 10 and the reception apparatus 24 are communicably connected to the network 28. The imaging apparatus 10 may be connected to the network 28 by a wireless method or a wired method, and the same applies to the reception apparatus 24. Further, the imaging apparatus 10 may be connected to the network 28 via a communication device such as a smart device, and the same applies to the reception apparatus 24.

Here, although the form example has been described in which the image file 16 is delivered via the network 28, this is merely an example. For example, the image file 16 may be delivered via a portable storage medium, such as a universal serial bus (USB) memory, or the imaging apparatus 10 may be directly connected to the reception apparatus 24 to deliver the image file 16 from the imaging apparatus 10 to the reception apparatus 24.

By the way, in a case where the image file 16 is received from the imaging person 14, for example, the recipient 26 at the reception site 22 performs, while referring to the metadata 20 included in the received image file 16, some processing (for example, editing) on the image file 16 using the reception apparatus 24 or the like, or manages the image file 16. Here, for example, in a case where the entire or a part of the metadata 20 is modified by a person who is not intended by the imaging person 14 (hereinafter referred to as "third party") or a part of the metadata 20 is deleted by the third party, the recipient 26 performs some processing on the image file 16 or manages the image file 16, using the metadata 20 having a content not intended by the imaging person 14. In order to avoid such a situation, it is important to provide the metadata 20 with high reliability from the imaging person 14 to the recipient 26.

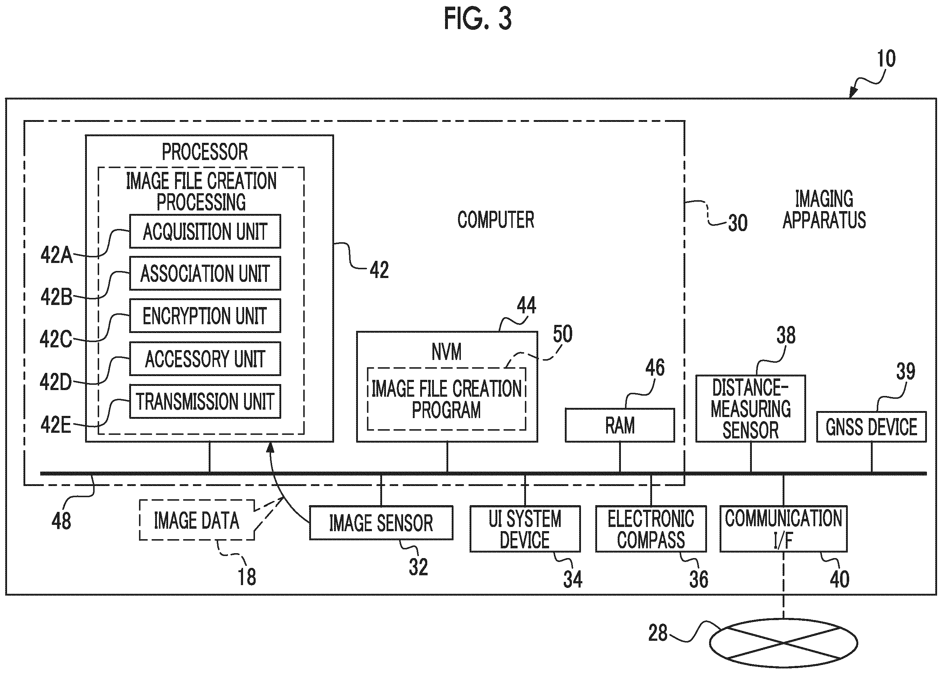

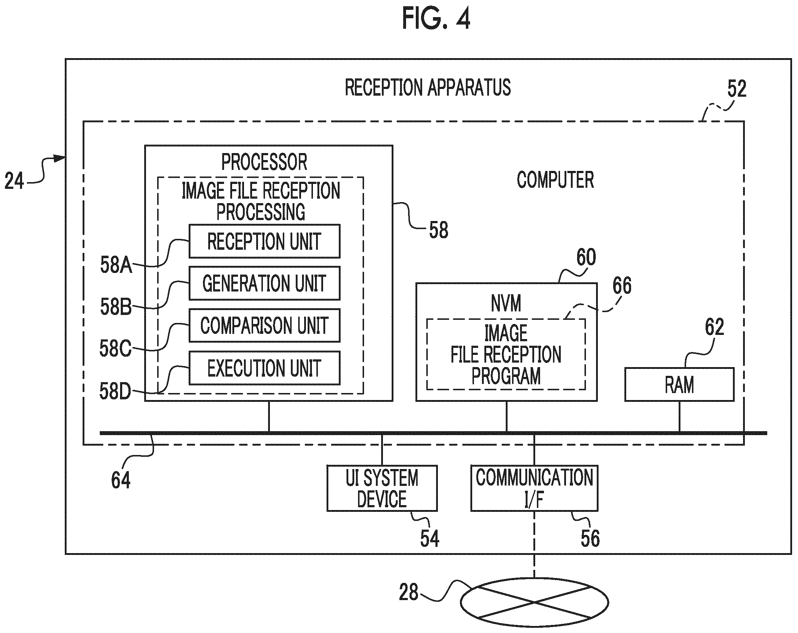

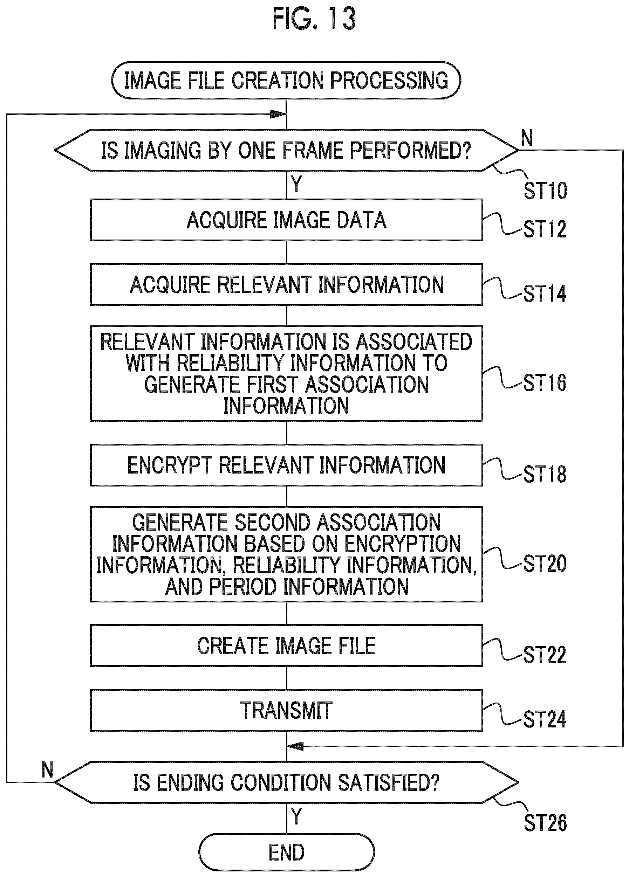

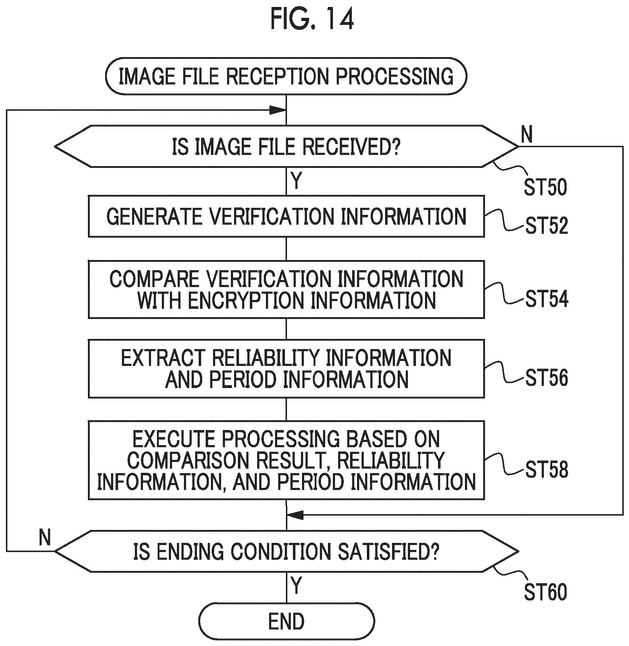

In view of such circumstances, in the present first embodiment, the imaging apparatus 10 performs image file creation processing (for example, refer to Figs. 3 and 13), and the reception apparatus 24 performs image file reception processing (for example, refer to Figs. 4 and 14). Hereinafter, the above will be described in more detail.

As shown in Fig. 3 as an example, the imaging apparatus 10 comprises a computer 30, an image sensor 32, a user interface (UI) system device 34, an electronic compass 36, a distance-measuring sensor 38, a global navigation satellite system (GNSS) device 39, and a communication interface (I/F) 40. The computer 30 is an example of "computer" according to the technology of the present disclosure.

The computer 30 comprises a processor 42, a non-volatile memory (NVM) 44, and a random access memory (RAM) 46. The processor 42, the NVM 44, and the RAM 46 are connected to a bus 48. The processor 42 is an example of "processor" according to the technology of the present disclosure.

The processor 42 is a processing device including a digital signal processor (DSP), a central processing unit (CPU), and a graphics processing unit (GPU), and the DSP and the GPU operate under control of the CPU and are responsible for execution of processing related to the image. Here, an example of the processor 42 includes the processing device including the DSP, the CPU, and the GPU, but this is merely an example. The processor 42 may be one or more CPUs and one or more GPUs, may be one or more CPUs and a DSP with integrated GPU functions, may be one or more CPUs and a DSP without integrated the GPU functions, or may be equipped with a tensor processing unit (TPU).

The NVM 44 is a non-volatile storage device that stores various programs, various parameters, and the like. An example of the NVM 44 includes a flash memory (for example, electrically erasable and programmable read only memory (EEPROM)). The RAM 46 is a memory where information is temporarily stored, and is used as a work memory by the processor 42. An example of the RAM 46 includes a dynamic random access memory (DRAM) or a static random access memory (SRAM).

The image sensor 32 is connected to the bus 48. An example of the image sensor 32 includes a complementary metal oxide semiconductor (CMOS) image sensor. The image sensor 32 images the imaging target region 12 (refer to Fig. 1) under control of the processor 42 to generate the image data 18.

Here, an example of the image sensor 32 includes the CMOS image sensor, but this is merely an example. The image sensor 32 may be another type of image sensor such as a charge coupled device (CCD) image sensor.

The UI system device 34 is connected to the bus 48. The UI system device 34 receives the instruction from the imaging person 14 (refer to Fig. 1 and Fig. 2) and outputs a signal indicating the received instruction to the processor 42. Further, the UI system device 34 presents various types of information to the imaging person 14 under the control of the processor 42. For example, the presentation of the various types of information is realized by display of the various types of information on a display or an output of the various types of information from a speaker as a voice.

The electronic compass 36 detects an orientation of an imaging direction (for example, direction of an optical axis of an imaging lens attached to the imaging apparatus 10) of the imaging apparatus 10, based on geomagnetism.

The distance-measuring sensor 38 measures an imaging distance. In the present first embodiment, the imaging distance refers to a distance from the imaging apparatus 10 (for example, a light-receiving surface of the image sensor 32) to the imaging target region 12 (for example, a specific person included in the imaging target region 12 shown in Fig. 1). A first example of the distance-measuring sensor 38 includes a distance-measuring sensor using an image plane phase difference pixel applied to the image sensor 32. A second example of the distance-measuring sensor 38 includes a distance-measuring sensor that uses a plurality of phase difference pixels and is provided in the imaging apparatus 10 as a sensor separate from the image sensor 32. A third example of the distance-measuring sensor 38 includes a time of flight (TOF) type distance-measuring sensor. As described above, the distance-measuring sensor 38 may be any sensor as long as the sensor can measure the imaging distance.

The GNSS device 39 receives radio waves transmitted from a plurality of satellites (not shown), and calculates latitude and longitude at which a current position of the imaging apparatus 10 can be specified based on the received radio waves.

The communication I/F 40 includes a communication processor, an antenna, and the like, and is connected to the bus 48. A communication standard applied to the communication I/F 40 may be, for example, a wireless communication standard including 5th generation mobile communication system (5G), Wi-Fi (registered trademark), Bluetooth (registered trademark), or the like, or may be a wired communication standard including Ethernet (registered trademark), Fast Ethernet (registered trademark), Gigabit Ethernet (registered trademark), or the like.

The NVM 44 stores an image file creation program 50. The image file creation program 50 is an example of "program" according to the technology of the present disclosure. The processor 42 reads out the image file creation program 50 from the NVM 44 and executes the readout image file creation program 50 on the RAM 46 to perform the image file creation processing. The image file creation processing is realized by the processor 42 operating as an acquisition unit 42A, an association unit 42B, an encryption unit 42C, an accessory unit 42D, and a transmission unit 42E, in accordance with the image file creation program 50 executed on the RAM 46.

As shown in Fig. 4 as an example, the reception apparatus 24 comprises a computer 52, a UI system device 54, and a communication I/F 56. The computer 52 comprises a processor 58, an NVM 60, and a RAM 62. The processor 58, the NVM 60, the RAM 62, the UI system device 54, and the communication I/F 56 are connected to a bus 64.

A hardware configuration of the computer 52 (that is, the processor 58, the NVM 60, and the RAM 62) is basically the same as a hardware configuration of the computer 30 shown in Fig. 3. Thus, the description of the hardware configuration of the computer 52 will be omitted here. Further, a role of the UI system device 54 in the reception apparatus 24 is basically the same as a role of the UI system device 34 in the imaging apparatus 10 shown in Fig. 3. Thus, the description thereof will be omitted here. Furthermore, a role of the communication I/F 56 in the reception apparatus 24 is basically the same as a role of the communication I/F 40 in the imaging apparatus 10 shown in Fig. 3. Thus, the description thereof will be omitted here.

The NVM 60 stores an image file reception program 66. The processor 58 reads out the image file reception program 66 from the NVM 60 and executes the readout image file reception program 66 on the RAM 62 to perform the image file reception processing. The image file reception processing is realized by the processor 58 operating as a reception unit 58A, a generation unit 58B, a comparison unit 58C, and an execution unit 58D, in accordance with the image file reception program 66 executed on the RAM 62.

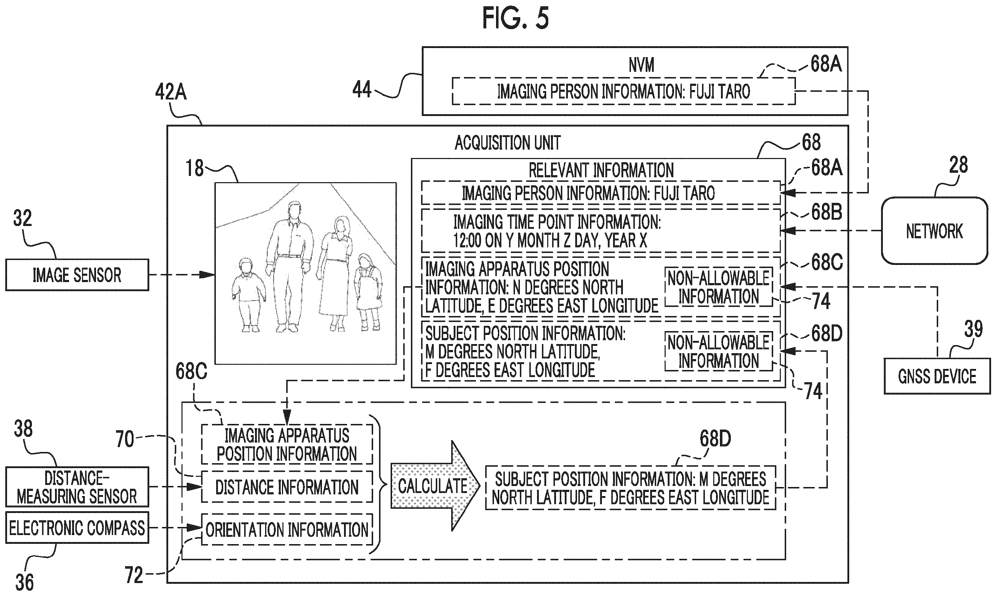

Figs. 5 to 9 show examples of processing contents of the acquisition unit 42A, the association unit 42B, the encryption unit 42C, the accessory unit 42D, and the transmission unit 42E in the imaging apparatus 10.

As shown in Fig. 5 as an example, the acquisition unit 42A executes an imaging step and an acquisition step. The imaging step is a step of acquiring, from the image sensor 32, the image data 18 obtained by performing the imaging by the image sensor 32. Further, the acquisition step is a step of acquiring relevant information 68 related to the image data 18. The imaging step is an example of "imaging step" according to the technology of the present disclosure. Further, the acquisition step is an example of "acquisition step" according to the technology of the present disclosure.

In order to prevent a time margin for the third party from creating information that is not legitimate relevant information 68 (that is, false relevant information 68), the acquisition step is automatically executed after the image data 18 is acquired. That is, the acquisition step is automatically executed after the imaging step. For example, the acquisition unit 42A synchronizes an end of the imaging step and a start of the acquisition step (for example, starting the acquisition step at a timing at which the imaging step ends) to continuously perform the imaging step and the acquisition step.

The relevant information 68 includes imaging person information 68A, imaging time point information 68B, imaging apparatus position information 68C, and subject position information 68D. The imaging person information 68A is an example of "imaging person information" according to the technology of the present disclosure. Further, the imaging time point information 68B is an example of "imaging time information" according to the technology of the present disclosure. Further, the imaging apparatus position information 68C is an example of "imaging apparatus position information" according to the technology of the present disclosure. Furthermore, the subject position information 68D is an example of "subject position information" according to the technology of the present disclosure.

The imaging person information 68A is information that can specify a person who performs the imaging using the imaging apparatus 10 to obtain the image data 18, that is, the imaging person 14. An example of the imaging person information 68A includes information indicating a name (for example, a name or a handle name) of the imaging person 14. The imaging person information 68A is stored in the NVM 44, and is acquired from the NVM 44 by the acquisition unit 42A.

For convenience of description, the form example has been described in which the acquisition unit 42A acquires the imaging person information 68A from the NVM 44, but this is merely an example. For example, the acquisition unit 42A may acquire the imaging person information 68A from the server or the like through the network 28, or may acquire the imaging person information 68A that is manually input through the UI system device 34.

The imaging time point information 68B indicates a time point at which the imaging using the imaging apparatus 10 to obtain the image data 18 is performed. For example, the acquisition unit 42A acquires the imaging time point information 68B through the network 28.

For convenience of description, the form example has been described in which the acquisition unit 42A acquires the imaging time point information 68B through the network 28, but this is merely an example. For example, the acquisition unit 42A may acquire the imaging time point information 68B from a real time clock built into the imaging apparatus 10 or a real time clock built into an external apparatus (for example, a smart device) connected to the imaging apparatus 10, or may acquire the imaging time point information 68B that is manually input via the UI system device 34.

Further, for convenience of description, the imaging time point information 68B is exemplified as information included in the relevant information 68, but this is merely an example. For example, the information included in the relevant information 68 may indicate a time required for exposure performed by the image sensor 32. Further, the information included in the relevant information 68 may indicate a time interval between frames. Further, the information included in the relevant information 68 may indicate a time point at which imaging for obtaining a video image is started. Further, the information included in the relevant information 68 may indicate a time point at which the imaging for obtaining the video image is ended. Further, the information included in the relevant information 68 may indicate a time from the start to the end of the imaging for obtaining the video image. As described above, the relevant information 68 may include the information indicating the time related to the imaging using the imaging apparatus 10.

The imaging apparatus position information 68C indicates a position at which the imaging by the imaging apparatus 10 to obtain the image data 18 is performed (for example, a position of the imaging apparatus 10 at a point in time at which the imaging is performed), and is acquired from the GNSS device 39 by the acquisition unit 42A. That is, the GNSS device 39 calculates the latitude and the longitude at which the current position of the imaging apparatus 10 can be specified, and the acquisition unit 42A acquires information indicating the calculated latitude and longitude as the imaging apparatus position information 68C.

For convenience of description, the form example has been described in which the acquisition unit 42A acquires the imaging apparatus position information 68C from the GNSS device 39, but this is merely an example. For example, the acquisition unit 42A may acquire the information indicating the latitude and the longitude that are manually input via the UI system device 34, as the imaging apparatus position information 68C. Further, for example, the acquisition unit 42A may acquire the information indicating the latitude and the longitude calculated by a GNSS device built into an external apparatus (for example, a smart device or the like) connected to the imaging apparatus 10, as the imaging apparatus position information 68C.

The subject position information 68D indicates a position of the imaging target region 12 (here, latitude and longitude of the imaging target region 12 as an example), and is calculated by the acquisition unit 42A. The acquisition unit 42A calculates the subject position information 68D based on the imaging apparatus position information 68C, distance information 70, and orientation information 72. The distance information 70 indicates the imaging distance measured by the distance-measuring sensor 38, and is acquired from the distance-measuring sensor 38 by the acquisition unit 42A. The orientation information 72 indicates the orientation detected by the electronic compass 36, and is acquired from the electronic compass 36 by the acquisition unit 42A.

For convenience of description, the form example has been described in which the acquisition unit 42A acquires the subject position information 68D, but this is merely an example. For example, the acquisition unit 42A may acquire the subject position information 68D that is manually input via the UI system device 34.

The imaging apparatus position information 68C and the subject position information 68D include non-allowable information 74. The non-allowable information 74 indicates that modification and deletion are not allowed. That is, the non-allowable information 74 included in the imaging apparatus position information 68C indicates that the modification and deletion of the imaging apparatus position information 68C are not allowed. The non-allowable information 74 included in the subject position information 68D indicates that the modification and deletion of the subject position information 68D are not allowed.

Therefore, whether or not the information includes the non-allowable information 74 is checked, and thus the imaging person 14 or the recipient 26 can determine whether or not the information is permitted to be modified and deleted. For example, in the present first embodiment, the imaging apparatus position information 68C and the subject position information 68D include the non-allowable information 74. Therefore, the imaging person 14 or the recipient 26 can recognize that the modification and deletion of the imaging apparatus position information 68C and the subject position information 68D are not allowed.

The acquisition unit 42A includes the non-allowable information 74 in one or more pieces of information (here, the imaging apparatus position information 68C and the subject position information 68D as an example) selected in response to the instruction received by the UI system device 34, from a plurality of pieces of information included in the relevant information 68.

One or more pieces of information including the non-allowable information 74 may be set in advance, among the plurality of pieces of information included in the relevant information 68. In this case, the acquisition unit 42A includes the non-allowable information 74 in one or more pieces of information set in advance.

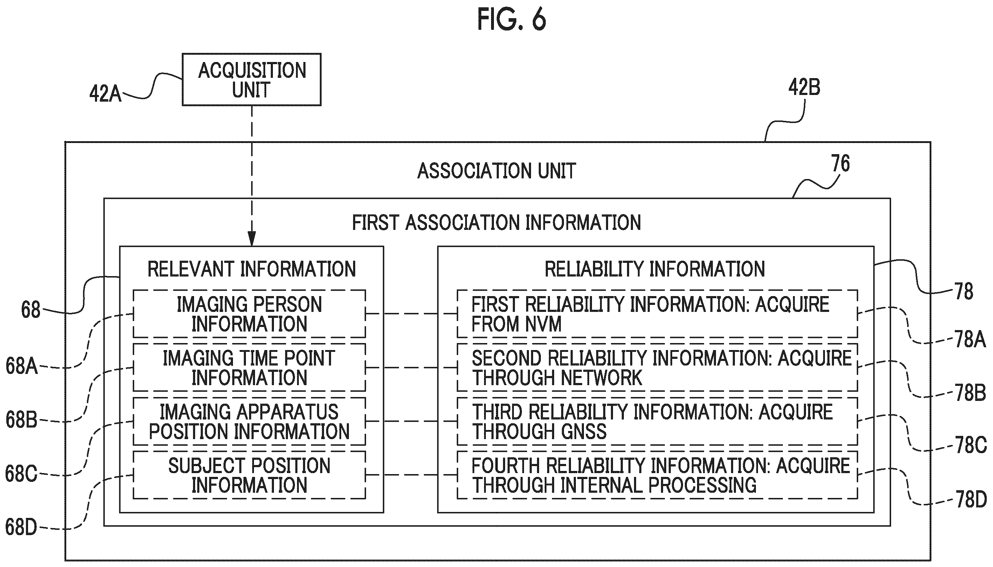

As shown in Fig. 6 as an example, the association unit 42B generates first association information 76. The first association information 76 is generated by associating reliability information 78 with the relevant information 68 acquired by the acquisition unit 42A. The reliability information 78 is an example of "reliability information" according to the technology of the present disclosure.

The reliability information 78 indicates the reliability of the relevant information 68. Here, the relevant information 68 having a high degree of modification or deletion may be said to be information with low reliability. On the contrary, the relevant information 68 having a low degree of modification or deletion may be said to be information with high reliability.

The reliability of the relevant information 68 is affected by a source of the relevant information 68. That is, the source of the relevant information 68 may be one indicator for the recipient 26 or the like to determine the reliability of the relevant information 68. For example, in a case where the source of the relevant information 68 is a source having high security (for example, source in which modification, deletion, or the like of the relevant information 68 is difficult), the recipient 26 or the like can determine that the reliability of the relevant information 68 is also high. In a case where the source of the relevant information 68 is a source having low security (for example, source in which modification, deletion, or the like of the relevant information 68 is easy), the recipient 26 or the like can determine that the reliability of the relevant information 68 is also low.

An example of the source having high security includes the network 28 or the GNSS. An example of a case where the security is moderate includes a case where the processor 42 obtains some information in cooperation with another sensor that measures a distance, an orientation, or the like. An example of the source with low security (that is, source with which a third party can easily intervene rather than the network 28 or the GNSS) includes the UI system device 34 or a readable/writeable memory (for example, the NVM 44). In this case, the relevant information 68 obtained by manual input or the relevant information 68 obtained from the readable/writeable memory may be said to be the relevant information 68 with lower reliability than the relevant information 68 obtained through a page of a public address on the network 28. In the present first embodiment, information related to whether or not the relevant information 68 is obtained through the network 28 is applied, as an example of the reliability information 78.

The reliability information 78 includes first reliability information 78A, second reliability information 78B, third reliability information 78C, and fourth reliability information 78D. The association unit 42B associates the first reliability information 78A with the imaging person information 68A, associates the second reliability information 78B with the imaging time point information 68A, associates the third reliability information 78C with the imaging apparatus position information 68C, and associates the fourth reliability information 78D with the subject position information 68D.

The first reliability information 78A is information that can specify a source of the imaging person information 68A. In the present first embodiment, the imaging person information 68A is information that is acquired by the acquisition unit 42A from the NVM 44. Thus, in the present first embodiment, the information indicating that the imaging person information 68A is acquired from the NVM 44 is applied, as an example of the present first reliability information 78A. The fact that the first reliability information 78A is associated with the imaging person information 68A means that the imaging person information 68A is not obtained through the network 28.

Here, in the same manner as in a case where the acquisition step is automatically executed after the imaging step, the association unit 42B automatically associates the first reliability information 78A with the imaging person information 68A after the acquisition unit 42A acquires the imaging person information 68A from the NVM 44. The reason for this is to prevent a time margin for the third party from creating false reliability information 78 and from associating the false reliability information 78 with the imaging person information 68A.

The second reliability information 78B is information that can specify a source of the imaging time point information 68B. In the present first embodiment, the imaging time point information 68B is information that is acquired through the network 28. Thus, in the present first embodiment, the information indicating that the imaging time point information 68B is acquired through the network 28 is applied, as an example of the second reliability information 78B. The fact that such second reliability information 78B is associated with the imaging time point information 68B means that the imaging time point information 68B is obtained through the network 28.

Further, in the same manner as the association between the first reliability information 78A and the imaging person information 68A, the second reliability information 78B is also automatically associated with the imaging time point information 68B after the imaging time point information 68B is acquired through the network 28.

The third reliability information 78C is information that can specify a source of the imaging apparatus position information 68C. In the present first embodiment, the imaging apparatus position information 68C is information that is acquired through the GNSS. Thus, in the present first embodiment, the information indicating that the imaging apparatus position information 68C is acquired through the GNSS is applied, as an example of the third reliability information 78C. The fact that such third reliability information 78C is associated with the imaging apparatus position information 68C means that the imaging apparatus position information 68C is not information obtained through the GNSS with high reliability.

Further, in the same manner as the association between the first reliability information 78A and the imaging person information 68A, the third reliability information 78C is also automatically associated with the imaging apparatus position information 68C after the imaging apparatus position information 68C is acquired through the GNSS.

The fourth reliability information 78D is information that can specify a source of the subject position information 68D. In the present first embodiment, the subject position information 68D is information that is acquired through internal processing by the processor 42 (that is, calculation of the subject position information 68D performed by the acquisition unit 42A based on the imaging apparatus position information 68C, the distance information 70, and the orientation information 72). Thus, in the present first embodiment, the information indicating that the subject position information 68D is acquired through the internal processing by the processor 42 is applied, as an example of the fourth reliability information 78D. The fact that such fourth reliability information 78D is associated with the subject position information 68D means that the subject position information 68D is obtained by the processor 42 with slightly high reliability performing the internal processing in cooperation with another device (for example, the electronic compass 36 or the distance-measuring sensor 38).

Further, in the same manner as the association between the first reliability information 78A and the imaging person information 68A, the fourth reliability information 78D is also automatically associated with the subject position information 68D after the subject position information 68D is acquired through the internal processing by the processor 42.

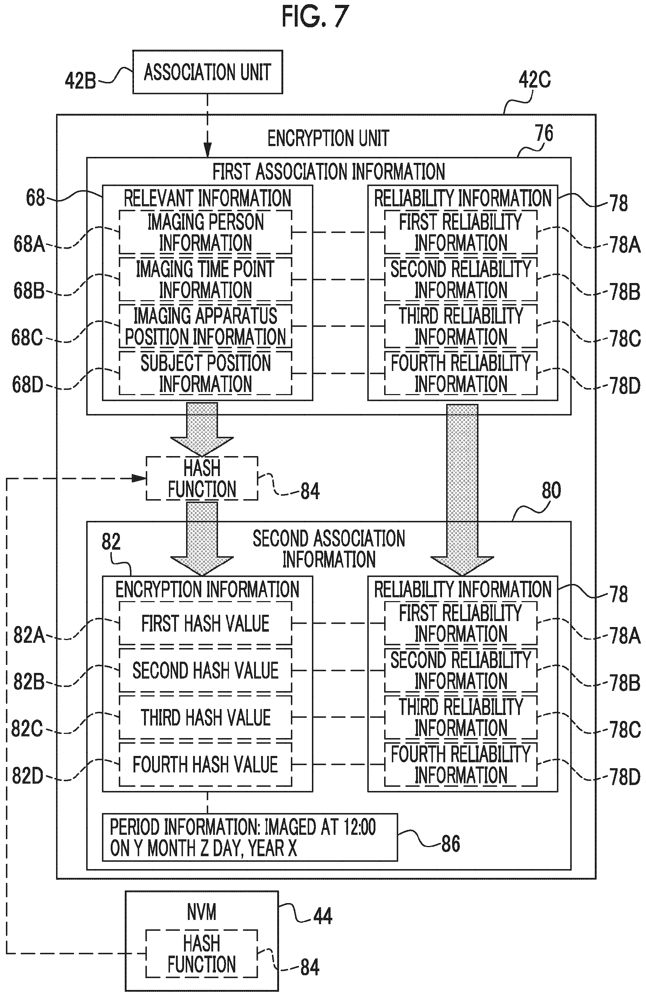

As shown in Fig. 7 as an example, the encryption unit 42C generates second association information 80 by using the first association information 76. The second association information 80 is different from the first association information 76 in that the relevant information 68 is replaced with encryption information 82 and period information 86 is included.

The encryption unit 42C executes an encryption step. The encryption step is a step of generating the encryption information 82 by encrypting the relevant information 68 included in the first association information 76. The encryption information 82 is an example of "first encryption information" according to the technology of the present disclosure.

In the same manner as in a case where the acquisition step is automatically executed after the imaging step, the encryption step is automatically executed after the acquisition step. The reason for this is to prevent a time margin for the third party from modifying the relevant information 68, deleting the relevant information 68, and encrypting the modified relevant information 68.

The NVM 44 stores a hash function 84. An example of the hash function 84 includes SHA-256, SHA-384, or SHA-512. The encryption unit 42C acquires the hash function 84 from the NVM 44 and encrypts (that is, hashes) the relevant information 68 using the acquired hash function 84 to generate the encryption information 82.

The encryption information 82 includes a first hash value 82A, a second hash value 82B, a third hash value 82C, and a fourth hash value 82D. The first hash value 82A is obtained by performing the hashing on the imaging person information 68A using the hash function 84. The second hash value 82B is obtained by performing the hashing on the imaging time point information 68B using the hash function 84. The third hash value 82C is obtained by performing the hashing on the imaging apparatus position information 68C using the hash function 84. The fourth hash value 82D is obtained by performing the hashing on the subject position information 68D by using the hash function 84.

The reliability information 78 associated with the relevant information 68 is succeeded as it is and associated with the encryption information 82. That is, the first reliability information 78A is associated with the first hash value 82A, the second reliability information 78B is associated with the second hash value 82B, the third reliability information 78C is associated with the third hash value 82C, and the fourth reliability information 78D is associated with the fourth hash value 82D.

In the encryption step, the encryption unit 42C generates the period information 86 that is related to a period in which the encryption information 82 is generated, and includes the generated period information 86 in the second association information 80. For example, in the encryption step, the period information 86 is associated with the encryption information 82 to be included in the second association information 80.

In the present first embodiment, the information generated by using the imaging time point information 68B is applied, as an example of the period information 86. An example of a timing at which the period information 86 is generated includes a timing at which the encryption (here, hashing as an example) of the relevant information 68 is ended.

The period information 86 includes information indicating a generation timing, such as that the encryption information 82 is generated at the time of imaging, and the imaging time point information 68B. This is merely an example, and the period information 86 may be the imaging time point information 68B itself. Further, the period information 86 may indicate a time point at a point in time at which the encryption of the relevant information 68 is actually ended. In this case, for example, the period information 86 may be acquired, through the network 28, by the encryption unit 42C at the timing at which the encryption of the relevant information 68 is ended, or may be acquired, from the real time clock built into the imaging apparatus 10, by the encryption unit 42C at the timing at which the encryption of the relevant information 68 is ended.

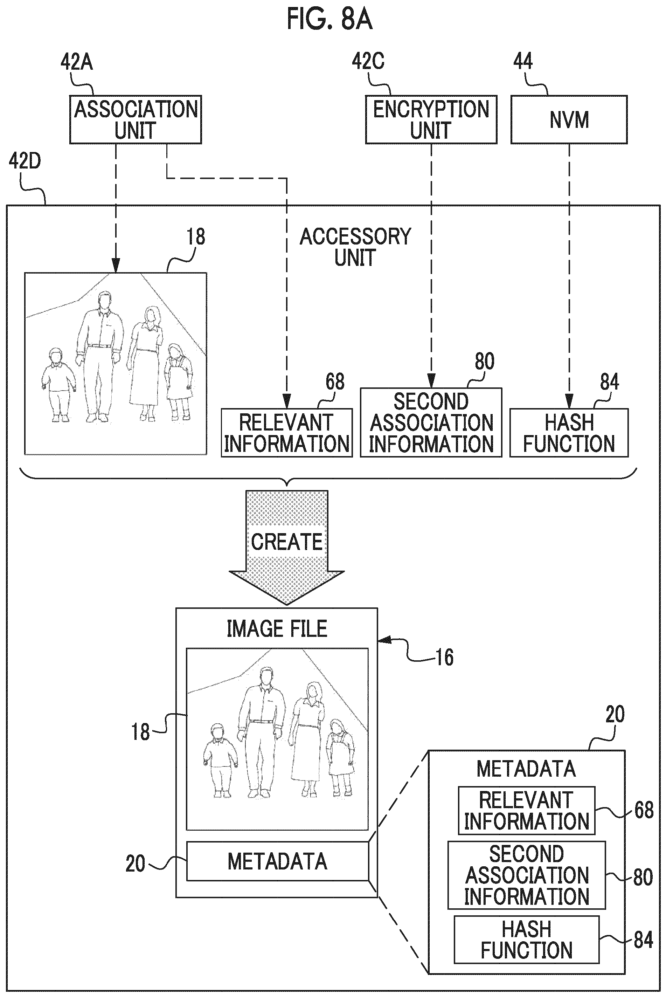

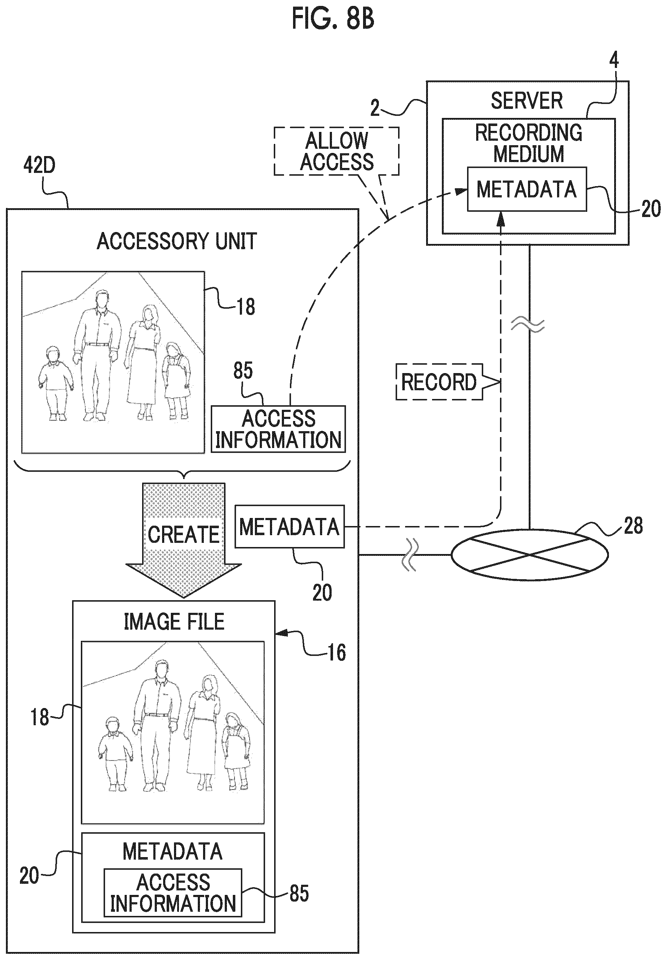

As shown in Figs. 8A and 8B as an example, the accessory unit 42D executes an accessory step of directly or indirectly attaching the relevant information 68, the second association information 80, and the hash function 84 to the image data 18 as the metadata 20. The accessory step includes a creation step. The creation step is a step of creating the image file 16. In the creation step, the image data 18 and the metadata 20 are filed in accordance with a predetermined file format to create the image file 16. In a case where the accessory unit 42D directly attaches the metadata 20 to the image data 18, for example, as shown in Fig. 8A, the image file 16 includes the relevant information 68, the second association information 80, and the hash function 84 as the metadata 20.

On the contrary, Fig. 8B shows an example of a case where the accessory unit 42D indirectly attaches the metadata 20 to the image data 18. The indirect attachment of the metadata 20 to the image data 18 is realized by including access information 85 in the metadata 20 in the image file 16.

In the example shown in Fig. 8B, the accessory step includes a recording step of recording the metadata 20 on a recording medium 4 of an external server 2 (for example, step of uploading the metadata 20 to the server 2 and causing the server 2 to record the metadata 20 on the recording medium 4 by the accessory unit 42D), and the creation step of creating the image file 16 including the access information 85 for accessing the metadata 20 in the recording medium 4 (for example, information for enabling access to the metadata 20 stored in the recording medium 4 of the server 2).

An example of the recording medium 4 includes a hard disk, a magnetic tape, or a flash memory. An example of the access includes processing of searching and browsing information (here, the metadata 20 as an example) on the network 28, processing of reading out information (here, the metadata 20 as an example) from a memory (here, the recording medium 4 as an example), or processing of writing information to the memory. Further, an example of the access information 85 includes an identifier (ID), a uniform resource locator (URL), or a download password.

As described above, with the inclusion of the access information 85 in the metadata 20 in the image file 16, the user who is officially permitted to use the image file 16 or the like can access the metadata 20 in the recording medium 4 by using the access information 85 included in the metadata 20 in the image file 16.

The metadata 20 included in the image file 16 and the metadata 20 included in the recording medium 20 may be the same data, or may be partially or entirely different data.

A first example of a case where the metadata 20 included in the image file 16 is different from the metadata 20 included in the recording medium 20 includes a form example in which all of the relevant information 68, the second association information 80, and the hash function 84 shown in Fig. 8A are recorded in the recording medium 20, and the metadata 20 other than the relevant information 68, the second association information 80, and the hash function 84 shown in Fig. 8A is recorded in the image file 16.

A second example of a case where the metadata 20 included in the image file 16 is different from the metadata 20 included in the recording medium 20 includes a form example in which a part of the relevant information 68, the second association information 80, and the hash function 84 shown in Fig. 8A (for example, the relevant information 68) is recorded in the recording medium 20, and the metadata 20 including the rest (for example, the second association information 80 and the hash function 84) is recorded in the image file 16.

A third example of a case where the metadata 20 included in the image file 16 is different from the metadata 20 included in the recording medium 20 includes a form example in which the access information 85 is recorded as the metadata 20 in the image file 16 and the metadata 20 other than the access information 85 is recorded in the recording medium 20.

As described above, with the distribution of the metadata 20 to the image file 16 and the recording medium 4, it is possible to improve the security of the metadata 20.

In each embodiment, although the form example has been described in which the metadata 20 is directly attached to the image data 18 in order to facilitate understanding of the technology of the present disclosure, the technology of the present disclosure is not limited thereto. The technology of the present disclosure also includes an example in which the accessory unit 42D indirectly attaches the metadata 20 to the image data 18.

In the same manner as in a case where the acquisition step is automatically executed after the imaging step, the accessory unit 42D automatically includes the relevant information 68 in the metadata 20 after the acquisition step. The reason for this is to prevent a time margin for the third party from modifying or deleting the relevant information 68 in a stage before the relevant information 68 is included in the metadata 20.

In the same manner as in a case where the acquisition step is automatically executed after the imaging step, the accessory unit 42D automatically includes the second association information 80 and the hash function 84 in the metadata 20 after the encryption step. The reason for this is to prevent a time margin for the third party from modifying or deleting the second association information 80 and the hash function 84 in a stage before the second association information 80 and the hash function 84 are included in the metadata 20.

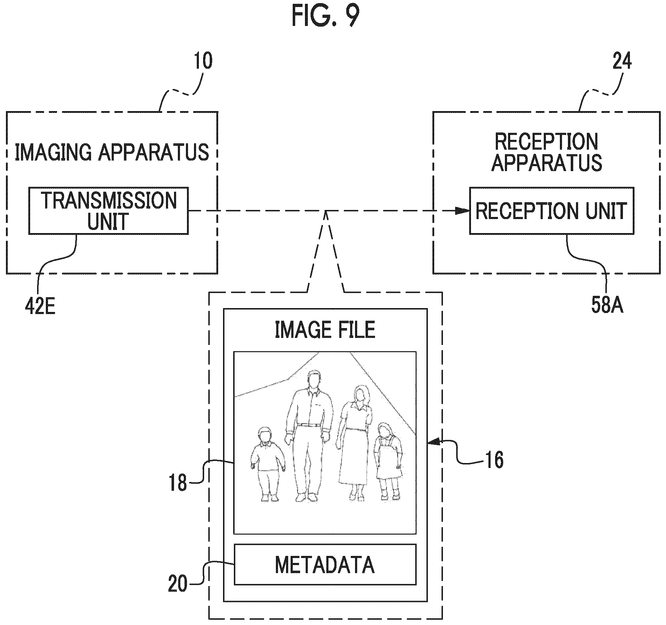

As shown in Fig. 9 as an example, in the imaging apparatus 10, the transmission unit 42E transmits the image file 16 created by the accessory unit 42D to the reception apparatus 24 via the communication I/F 40 (refer to Fig. 3). The reception apparatus 24 receives the image file 16 transmitted from the transmission unit 42E via the communication I/F 56 (refer to Fig. 4). Accordingly, the image file 16 is delivered from the imaging person 14 to the recipient 26 (refer to Fig. 2).

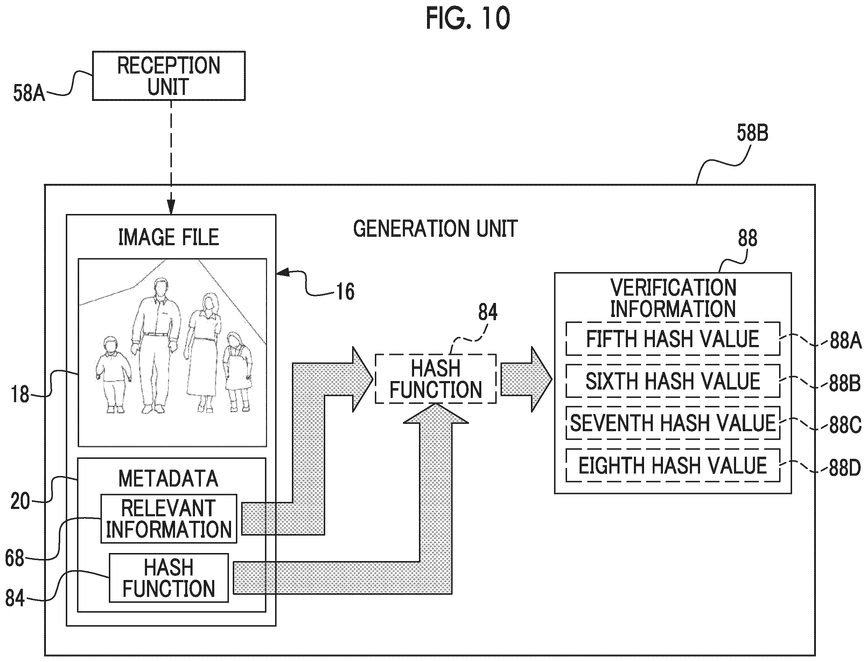

Figs. 10 to 12 show examples of processing contents of the reception unit 58A, the generation unit 58B, the comparison unit 58C, and the execution unit 58D in the reception apparatus 24.

As shown in Fig. 10 as an example, the generation unit 58B acquires the image file 16, which is received by the reception unit 58A, from the reception unit 58A. The generation unit 58B executes a generation step. The generation step is a step of generating verification information 88 by using the relevant information 68 and the hash function 84. The generation step is an example of "generation step" according to the technology of the present disclosure.

In the generation step, the generation unit 58B acquires the relevant information 68 and the hash function 84 from the metadata 20 included in the image file 16, and performs the hashing on the relevant information 68 using the hash function 84 to generate the verification information 88. The verification information 88 includes a fifth hash value 88A, a sixth hash value 88B, a seventh hash value 88C, and an eighth hash value 88D.

The fifth hash value 88A is obtained by the hashing on the imaging person information 68A (refer to Fig. 6), which is included in the relevant information 68, using the hash function 84. The sixth hash value 88B is obtained by the hashing on the imaging time point information 68A (refer to Fig. 6), which is included in the relevant information 68, using the hash function 84. The seventh hash value 88C is obtained by the hashing on the imaging apparatus position information 68C, which is included in the relevant information 68, using the hash function 84. The eighth hash value 88D is obtained by the hashing on the subject position information 68D using the hash function 84.

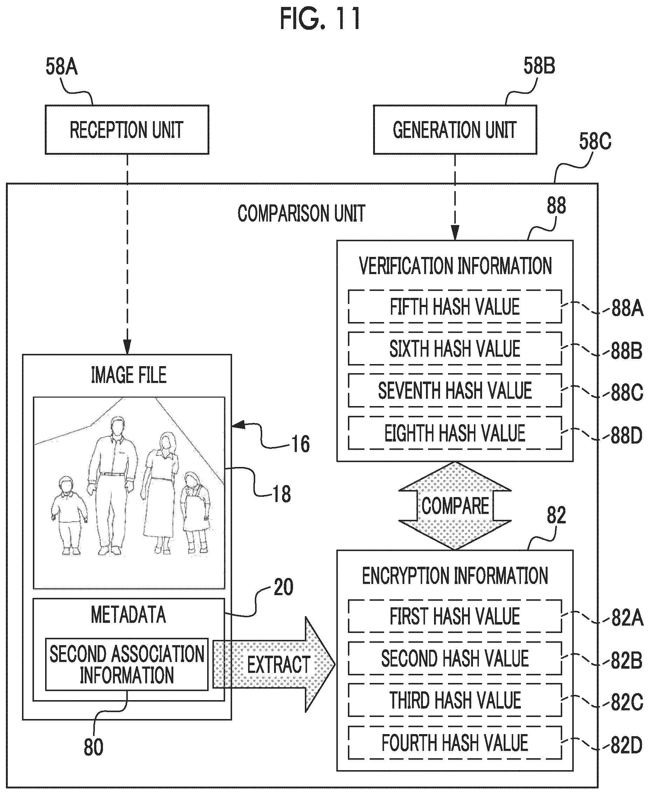

As shown in Fig. 11 as an example, the comparison unit 58C acquires, from the reception unit 58A, the image file 16 received by the reception unit 58A (that is, the same image file 16 as the image file 16 acquired by the generation unit 58B). The comparison unit 58C extracts the encryption information 82 from the second association information 80 in the metadata 20, which is included in the image file 16 acquired from the reception unit 58A.

The comparison unit 58C acquires, from the generation unit 58B, the verification information 88 generated by the generation unit 58B. Here, the comparison unit 58C executes a comparison step. The comparison step is an example of "comparison step" according to the technology of the present disclosure. The comparison step is a step of comparing the verification information 88, which is acquired from the generation unit 58B, with the encryption information 82, which is extracted from the second association information 80. As shown in Fig. 8B, in a case where the metadata 20 is recorded on the recording medium 4 of the server 2, verification of the modification or deletion of the metadata 20 in the comparison step may be executed in the server 2, or may be executed by a device (a personal computer, a server other than the server 2, or the like) communicably connected to the server 2.

The comparison unit 58C compares the fifth hash value 88A, which is included in the verification information 88, with the first hash value 82A, which is included in the encryption information 82, to determine whether or not the fifth hash value 88A matches the first hash value 82A. Further, the comparison unit 58C compares the sixth hash value 88B, which is included in the verification information 88, with the second hash value 82B, which is included in the encryption information 82, to determine whether or not the sixth hash value 88B matches the second hash value 82B. Further, the comparison unit 58C compares the seventh hash value 88C, which is included in the verification information 88, with the third hash value 82C, which is included in the encryption information 82, to determine whether or not the seventh hash value 88C matches the third hash value 82C. Further, the comparison unit 58C compares the eighth hash value 88D, which is included in the verification information 88, with the fourth hash value 82D, which is included in the encryption information 82, to determine whether or not the eighth hash value 88D matches the fourth hash value 82D.

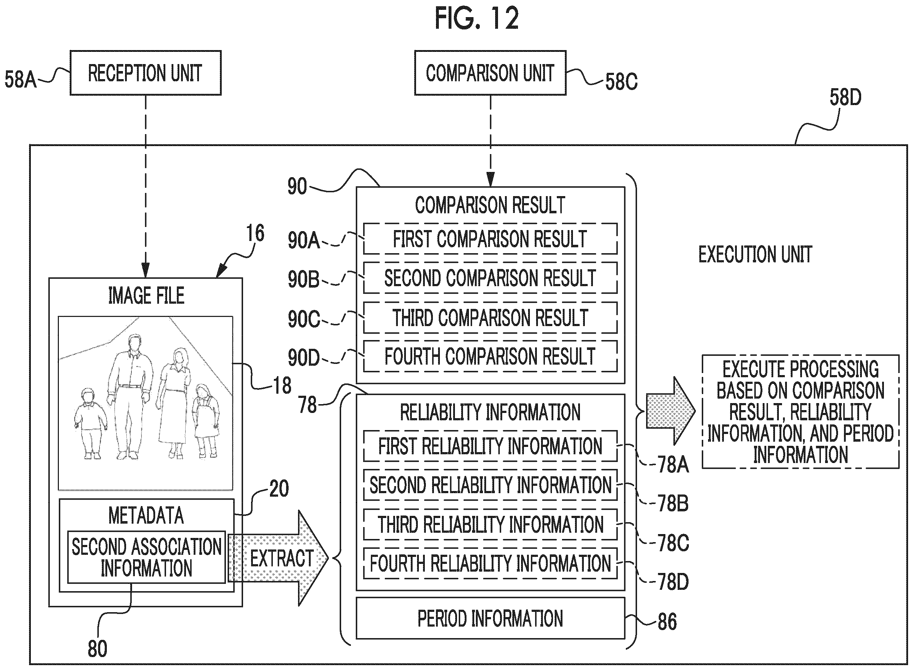

As shown in Fig. 12 as an example, the execution unit 58D acquires a comparison result 90 from the comparison unit 58C. The comparison result 90 includes a first comparison result 90A, a second comparison result 90B, a third comparison result 90C, and a fourth comparison result 90D.

The first comparison result 90A is a result of comparing the fifth hash value 88A with the first hash value 82A by the comparison unit 58C (that is, result of determining whether or not the fifth hash value 88A matches the first hash value 82A). The second comparison result 90B is a result of comparing the sixth hash value 88B with the second hash value 82B by the comparison unit 58C (that is, result of determining whether or not the sixth hash value 88B matches the second hash value 82B). The third comparison result 90C is a result of comparing the seventh hash value 88C with the third hash value 82C by the comparison unit 58C (that is, result of determining whether or not the seventh hash value 88C matches the third hash value 82C). The fourth comparison result 90D is a result of comparing the eighth hash value 88D and the fourth hash value 82D by the comparison unit 58C (that is, result of determining whether or not the eighth hash value 88D matches the fourth hash value 82D).

The execution unit 58D acquires, from the reception unit 58A, the image file 16 received by the reception unit 58A (that is, the same image file 16 as the image file 16 acquired by the generation unit 58B and the comparison unit 58C). Further, the execution unit 58D extracts the reliability information 78 and the period information 86 from the second association information 80 in the metadata 20, which is included in the image file 16 acquired from the reception unit 58A.

The execution unit 58D executes processing based on the comparison result 90 acquired from the comparison unit 58C, the reliability information 78 extracted from the second association information 80, and the period information 86 extracted from the second association information 80.

An example of the processing based on the comparison result 90, the reliability information 78, and the period information 86 includes prevention processing. The prevention processing refers to, for example, processing of preventing the recipient 26 using the metadata 20 from being disadvantaged in advance, due to the modification of the metadata 20 or the deletion of a part of the metadata 20.

A first example of the prevention processing includes processing of presenting the comparison result 90, the reliability information 78, and the period information 86 to the recipient 26 via the UI system device 34 (for example, display), or of notifying the imaging person 14 of the comparison result 90, the reliability information 78, and the period information 86.

A second example of the prevention processing includes processing of calculating, based on the comparison result 90, the reliability information 78, and the period information 86, a numerical value indicating a possibility that the relevant information 68 included in the metadata 20 is modified or a part of the relevant information 68 is deleted, and of outputting information based on the calculated numerical value to a specific output destination (for example, the UI system device 34, the NVM 44, or an external apparatus on the network 28).

A third example of the prevention processing includes processing of calculating a numerical value indicating a possibility as described above, and of including information based on the calculated numerical value in the metadata 20.

A fourth example of the prevention processing includes processing of calculating a degree of difference between a time point indicated by the period information 86 and a time point indicated by the imaging time point information 68B included in the metadata 20 of the image file 16, and of outputting information based on the calculated degree of difference to a specific output destination. An example of the information based on the degree of difference includes information indicating the degree of difference itself or alert information determined according to the degree of difference. An example of the alert information includes information that prompts the user to pay more attention as the degree of difference is larger.

A fifth example of the prevention processing includes processing of calculating the degree of difference as described above, and of including information based on the calculated degree of difference (for example, a flag according to the degree of difference) in the metadata 20.

A sixth example of the prevention processing includes processing of calculating the numerical value indicating the possibility or the degree of difference as described above, and of deleting the image file 16, assigning the flag to the image file 16, or storing the image file 16 in a specific storage region in a case where the numerical value indicating the possibility or the degree of difference exceeds a threshold value.

Here, although the form example has been described in which the execution unit 58D executes the prevention processing based on the comparison result 90, the reliability information 78, and the period information 86, this is merely an example. For example, the execution unit 58D may execute the prevention processing based on one piece of information or two pieces of information among the comparison result 90, the reliability information 78, and the period information 86.

Next, actions of portions of the imaging apparatus 10 and the reception apparatus 24 according to the technology of the present disclosure will be described with reference to Figs. 13 and 14.

First, the action of the portion of the imaging apparatus 10 according to the technology of the present disclosure will be described with reference to Fig. 13. A flow of the image file creation processing shown in a flowchart shown in Fig. 13 is an example of "information creation method" according to the technology of the present disclosure.

In the image file creation processing shown in Fig. 13, first, in step ST10, the acquisition unit 42A determines whether or not the image sensor 32 has performed the imaging by one frame. In step ST10, in a case where the image sensor 32 does not perform the imaging by one frame (for example, imaging for still image), negative determination is made, and the image file creation processing proceeds to step ST26. In step ST10, in a case where the image sensor 32 performs the imaging by one frame, positive determination is made, and the first image file creation processing proceeds to step ST12.

In step ST12, the acquisition unit 42A acquires the image data 18 from the image sensor 32. The processing of step ST12 is executed, and then the image file creation processing proceeds to step ST14.

In step ST14, the acquisition unit 42A acquires the relevant information 68 related to the image data 18. The processing of step ST14 is executed, and then the image file creation processing proceeds to step ST16.

In step ST16, the association unit 42B associates the relevant information 68, which is acquired in step ST14, with the reliability information 78 to generate the first association information 76. The processing of step ST16 is executed, and then the image file creation processing proceeds to step ST18.

In step ST18, the encryption unit 42C encrypts the relevant information 68, which is included in the first association information 76 generated in step ST16, by using the hash function 84 to generate the encryption information 82. The processing of step ST18 is executed, and then the image file creation processing proceeds to step ST20.

In step ST20, the encryption unit 42C generates the period information 86. The encryption unit 42C generates the second association information 80 based on the encryption information 82 generated in step ST18, the reliability information 78 used in step ST16, and the period information 86. The processing of step ST20 is executed, and then the image file creation processing proceeds to step ST22.

In step ST22, the accessory unit 42D attaches the relevant information 68 acquired in step ST14, the second association information 80 generated in step ST20, and the hash function 84 used in step ST18 to the image data 18 as the metadata 20 to create the image file 16. The processing of step ST22 is executed, and then the image file creation processing proceeds to step ST24.

In step ST24, the transmission unit 42E transmits the image file 16 created in step ST22 to the reception apparatus 24. The processing of step ST24 is executed, and then the image file creation processing proceeds to step ST26.

In step ST26, the transmission unit 42E determines whether or not a condition for ending the image file creation processing is satisfied. An example of the condition for ending the image file creation processing includes a condition that the UI system device 34 receives an instruction to end the image file creation processing. In step ST26, in a case where the condition for ending the image file creation processing is not satisfied, negative determination is made, and the image file creation processing proceeds to step ST10. In step ST26, in a case where the condition for ending the image file creation processing is satisfied, positive determination is made, and the image file creation processing is ended.

Next, the action of the portion of the reception apparatus 24 according to the technique of the present disclosure will be described with reference to Fig. 14.

In the reception processing shown in Fig. 14, first, in step ST50, the reception unit 58A determines whether or not the image file 16, which is transmitted from the transmission unit 42E of the imaging apparatus 10 by the execution of the processing of step ST24 shown in Fig. 13, has been received. In step ST50, in a case where the image file 16 has not been received, negative determination is made, and the image file reception processing proceeds to step ST60. In step ST50, in a case where the image file 16 has been received, positive determination is made, and the image file reception processing proceeds to step ST52.

In step ST52, the generation unit 58B encrypts the relevant information 68 included in the metadata 20 of the image file 16, which is received in step ST50, by using the hash function 84 included in the metadata 20 to generate the verification information 88. The processing of step ST52 is executed, and then the image file reception processing proceeds to step ST54.

In step ST54, the comparison unit 58C extracts the encryption information 82 from the second association information 80 included in the metadata 20 of the image file 16, which is received in step ST50. The comparison unit 58C compares the encryption information 82, which is extracted from the second association information 80, with the verification information 88, which is generated in step ST52. The processing of step ST54 is executed, and then the reception processing proceeds to step ST56.

In step ST56, the execution unit 58D extracts the reliability information 78 and the period information 86 from the second association information 80 included in the metadata 20 of the image file 16, which is received in step ST50. The processing of step ST56 is executed, and then the image file reception processing proceeds to step ST58.

In step ST58, the execution unit 58D executes processing (for example, the prevention processing), based on the comparison result 90 that is the comparison result between the encryption information 82 and the verification information 88 in step ST54, the reliability information 78 extracted from the second association information 80 in step ST56, and the period information 86 extracted from the second association information 80 in step ST56. The processing of step ST58 is executed, and then the image file reception processing proceeds to step ST60.

In step ST60, the execution unit 58D determines whether or not a condition for ending the image file reception processing is satisfied. An example of the condition for ending the image file reception processing includes a condition that the UI system device 54 receives an instruction to end the image file reception processing. In step ST60, in a case where the condition for ending the image file reception processing is not satisfied, negative determination is made, and the image file reception processing proceeds to step ST50. In step ST60, in a case where the condition for ending the image file reception processing is satisfied, positive determination is made, and the image file reception processing is ended.

As described above, in the present first embodiment, the imaging apparatus 10 acquires the relevant information 68 related to the image data 18, and generates the encryption information 82 in which the relevant information 68 is encrypted. The imaging apparatus 10 attaches the encryption information 82 to the image data 18 as the metadata 20 to create the image file 16.

In the present first embodiment, the imaging apparatus 10 includes the period information 86 in the metadata 20 of the image file 16. The period information 86 relates to the period in which the encryption information 82 is generated. Therefore, for example, in a case where the image file 16 is received from the imaging person 14, the recipient 26 or the like can estimate validity of a period in which the relevant information 68 is encrypted, with reference to the period information 86 included in the metadata 20 of the image file 16. For example, in a case where the recipient 26 or the like feels the validity of the period in which the relevant information 68 is encrypted, the recipient 26 or the like can determine that the reliability of the relevant information 68 is high. On the contrary, in a case where the recipient 26 or the like feels abnormality in the period in which the relevant information 68 is encrypted, the recipient 26 or the like can determine that the reliability of the relevant information 68 is low. As described above, with the inclusion of the period information 86 in the metadata 20 of the image file 16, it is possible to improve the security of the relevant information 68.

Further, the imaging apparatus 10 includes the reliability information 78 in the metadata 20. The reliability information 78 indicates the reliability of the relevant information 68. Therefore, for example, in a case where the image file 16 is received from the imaging person 14, the recipient 26 or the like can determine highness or lowness of the reliability of the relevant information 68, with reference to the reliability information 78 included in the metadata 20 of the image file 16. As described above, with the inclusion of the reliability information 78 in the metadata 20 of the image file 16, it is possible to improve the security of the relevant information 68.

Further, in the present first embodiment, the imaging apparatus 10 includes the relevant information 68 in the metadata 20. In this case, for example, with the reception of the image file 16 itself or the metadata 20 included in the image file 16 from the imaging person 14, the recipient 26 or the like can receive the relevant information 68 related to the image data 18. Accordingly, the recipient 26 or the like can easily obtain the relevant information 68.

Further, in the present first embodiment, the information related to whether or not the relevant information 68 is obtained through the network 28 is applied, as an example of the reliability information 78. Therefore, in a case where the relevant information 68 is obtained through the network 28, the recipient 26 or the like can determine that the relevant information 68 is information having high security, which is obtained from a public page. In a case where the relevant information 68 is not the information obtained through the network 28 or the GNSS, the recipient 26 or the like can determine that the relevant information 68 is information having low security.

Further, in the present first embodiment, the imaging apparatus 10 creates the image file 16 including the relevant information 68 and the encryption information 82. That is, the image file 16 includes the relevant information 68, which is information before being encrypted, in addition to the encryption information 82. Accordingly, for example, the reception apparatus 24 and the like can realize not only the processing using the encryption information 82 but also the processing using the relevant information 68.

Further, in the present first embodiment, the relevant information 68 includes the imaging person information 68A, the imaging time point information 68B, the imaging apparatus position information 68C, and the subject position information 68D. The relevant information 68 is encrypted, and included in the metadata 20 of the image file 16 as the encryption information 82. Accordingly, it is possible to improve the security of the imaging person information 68A, the imaging time point information 68B, the imaging apparatus position information 68C, and the subject position information 68D.

Further, in the present first embodiment, the non-allowable information 74 is included in the imaging apparatus position information 68C and the subject position information 68D, among the imaging person information 68A, the imaging time point information 68B, the imaging apparatus position information 68C, and the subject position information 68D. The non-allowable information 74 indicates that modification and deletion are not allowed.

Therefore, the imaging person 14, the recipient 26, or the like can recognize that the modification and deletion of the imaging apparatus position information 68C and the subject position information 68D are not allowed. Accordingly, the imaging person 14, the recipient 26, or the like can separately handle the information for which the modification and the deletion are allowed (here, the imaging apparatus position information 68C and the subject position information 68D as an example) and the information for which the modification and the deletion are not allowed (here, the imaging apparatus position information 68C and the subject position information 68D as an example). Further, it is also possible to suppress the modification or deletion of the imaging apparatus position information 68C and the subject position information 68D against the intention of the imaging person 14, the recipient 26, or the like.

Further, in the present first embodiment, the metadata 20 includes the hash function 84 used for the encryption of the relevant information 68. Therefore, the recipient 26 or the like who has received the image file 16 from the imaging person 14 can easily obtain the hash function 84 used for the encryption of the relevant information 68.

Further, in the present first embodiment, the reception apparatus 24 receives the image file 16 transmitted from the imaging apparatus 10, and the reception apparatus 24 acquires the hash function 84 from the image file 16. The encryption (that is, hashing) using the hash function 84 is performed on the relevant information 68 by the reception apparatus 24 to generate the verification information 88, and the verification information 88 is compared with the encryption information 82. Accordingly, for example, in a case where the verification information 88 does not match the encryption information 82, the recipient 26 or the like can determine that there is a high possibility that the relevant information 68 has been modified or a part of the relevant information 68 has been deleted. On the contrary, for example, in a case where the verification information 88 and the encryption information 82 match, the recipient 26 or the like can determine that there is a low possibility that the relevant information 68 has been modified or a part of the relevant information 68 has been deleted.

Further, in the present first embodiment, in the imaging apparatus 10, the processing of encrypting the relevant information 68 is automatically executed after the acquisition of the relevant information 68. Accordingly, for example, there is no time margin for the modification of the relevant information 68 or the deletion of a part of the relevant information 68 until the encryption information 82 is generated from the relevant information 68, and thus it is possible to improve the reliability of the relevant information 68.

Further, in the present first embodiment, in the imaging apparatus 10, the relevant information 68 is automatically acquired after the acquisition of the image data 18. Accordingly, for example, there is no time margin for the modification of the relevant information 68 by the third party, the deletion of the relevant information 68 by the third party, or the creation of the false relevant information 68 by the third party in a stage before the relevant information 68 is included in the metadata 20, and thus it is possible to improve the reliability of the relevant information 68.

Further, in the present first embodiment, the acquisition unit 42A automatically acquires the relevant information 68 after the acquisition unit 42A acquires the image data 18, which is obtained by performing the imaging by the image sensor 32, from the image sensor 32. Accordingly, for example, there is no time margin for the creation of the information that is not legitimate relevant information 68 (that is, false relevant information 68) by the third party, and thus it is possible to improve the reliability of the relevant information 68.

In the first embodiment, the form example has been described in which the non-allowable information 74 is included in the imaging apparatus position information 68C and the subject position information 68D, but this is merely an example. For example, the non-allowable information 74 may be included in the imaging apparatus position information 68C or the subject position information 68D, or may be included in other information (for example, the imaging person information 68A or the imaging time point information 68B) included in the relevant information 68. Further, the non-allowable information 74 may be assigned to the entire relevant information 68.

Further, in the first embodiment, the form example has been described in which the period information 86 is included in the second association information 80 as it is, but this is merely an example. For example, in the same manner as in a case where the relevant information 68 is encrypted, the period information 86 may be encrypted, and the information in which the period information 86 is encrypted may be included in the second association information 80. Further, in this case, the period information 86 before being encrypted may be included in the metadata 20 of the image file 16 as a part of the relevant information 68.

### [Second Embodiment]

In the first embodiment, the form example has been described in which the image data 18 itself obtained by performing the imaging by the imaging apparatus 10 is delivered from the imaging person 14 to the recipient 26. However, in the present second embodiment, a form example will be described in which the image data 18 is edited by the imaging person 14 or the like, and the edited image data 18 is delivered to the recipient 26. In the present second embodiment, the same reference numerals will be assigned to the same components as the components described in the first embodiment and description thereof will be omitted, and parts different from the first embodiment will be described.

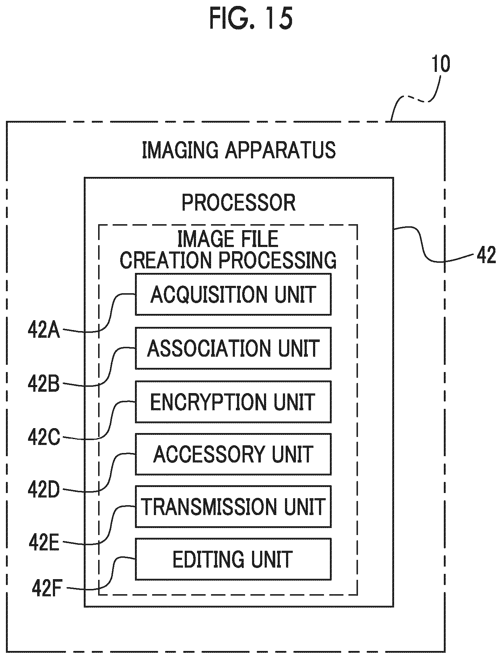

As shown in Fig. 15 as an example, the image file creation processing according to the present second embodiment is realized by the processor 42 further operating as an editing unit 42F, as compared with the image file creation processing according to the first embodiment. The editing unit 42F executes an editing step. The editing step is a step of editing the image data 18.

In the present second embodiment, although a form example has been described in which the imaging apparatus 10 performs the editing step, this is merely an example. For example, the editing step may be performed by a smart device, a personal computer, a server, or the like that is communicably connected to the imaging apparatus 10.

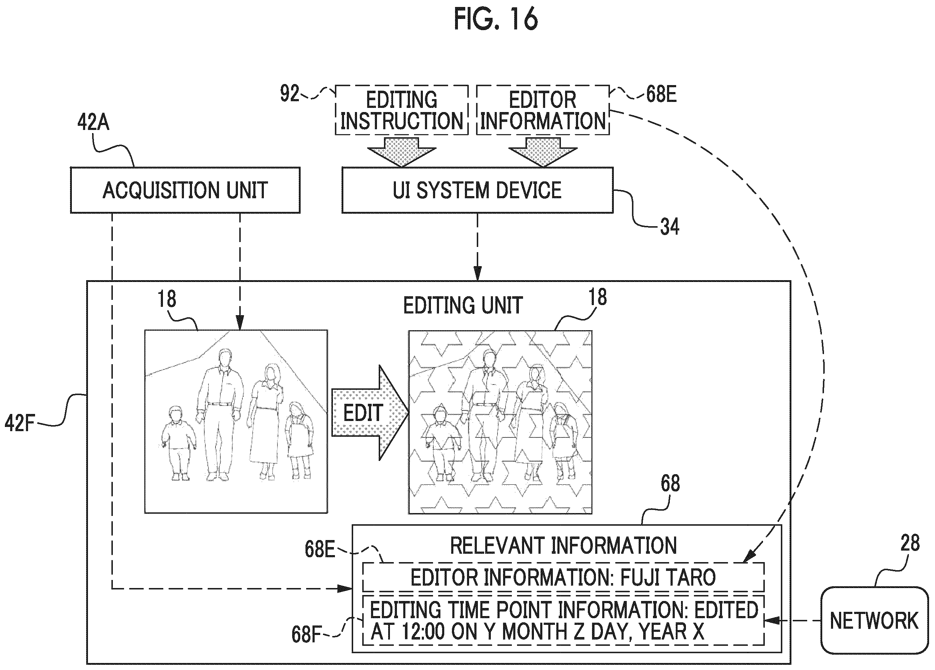

As shown in Fig. 16 as an example, the UI system device 34 receives an editing instruction 92 from the imaging person 14 or the like. The editing instruction 92 refers to, for example, an instruction to edit the image data 18, such as a specific content. In a case where the UI system device 34 receives the editing instruction 92 received by the UI system device 34, the editing unit 42F edits the image data 18 in response to the editing instruction 92.

The UI system device 34 receives editor information 68E. The editor information 68E relates to an editor. The editor refers to a person who edits the image data 18. An example of the information related to the editor includes a name of the editor, a nickname of the editor, information indicating a location of the editor, and a contact of the editor. The editor may be the imaging person 14, or a person other than the imaging person 14.

The editing unit 42F includes editing-relevant information, which is information related to editing, in the relevant information 68. For example, in the present second embodiment, the editing unit 42F includes the editor information 68E, which is received by the UI system device 34, in the relevant information 68. Further, in the same manner as the acquisition unit 42A acquires the imaging time point information 68B through the network 28 in the first embodiment, the editing unit 42F acquires editing time point information 68F through the network 28 and includes the editing time point information 68F in the relevant information 68. The editing time point information 68F indicates a time point at which the image data 18 is edited. An example of the time point at which the image data 18 is edited includes a time point at which the editing on the image data 18 is started or a time point at which the editing on the image data 18 is ended. Further, the editing time point information 68F may include information indicating a total time required for the editing on the image data 18.

Here, although the form example has been described in which the UI system device 34 receives the editing instruction 92 and the editor information 68E, this is merely an example. For example, the editing instruction 92 or the editor information 68E may be provided to the editing unit 42F from an external apparatus (for example, a smart device, a personal computer, or a server) that is communicably connected to the imaging apparatus 10. The NVM 44 may store the editor information 68E. In this case, the editing unit 42F may acquire the editor information 68E from the NVM 44 at a timing at which the image data 18 is edited.

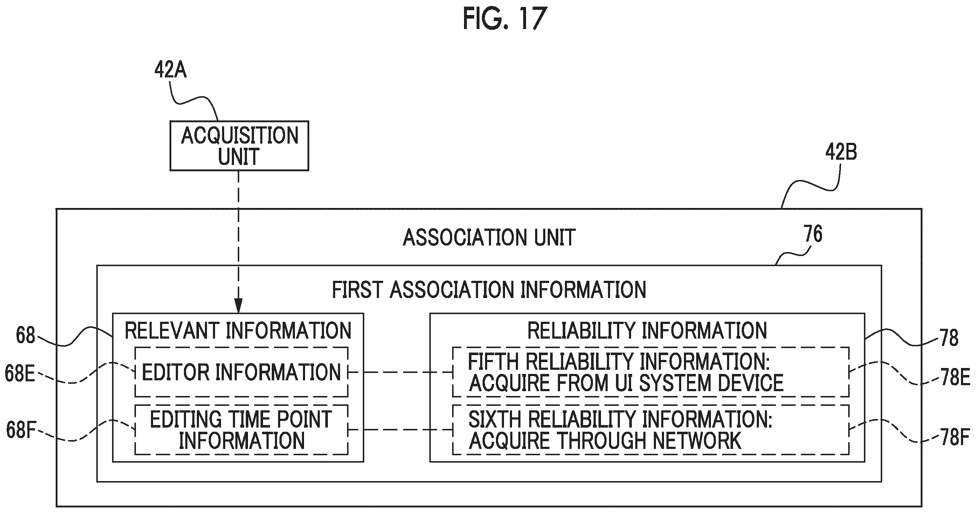

As shown in Fig. 17 as an example, the association unit 42B generates fifth reliability information 78E and sixth reliability information 78F, and includes the generated fifth reliability information 78E and sixth reliability information 78F in the reliability information 78. Further, the association unit 42B associates the fifth reliability information 78E with the editor information 68E, and associates the sixth reliability information 78F with the editing time point information 68F.

The fifth reliability information 78E is information that can specify a source of the editor information 68E. In the present second embodiment, the editor information 68E is information that is acquired by the editing unit 42F from the UI system device 34. Thus, in the present second embodiment, the information indicating that the editor information 68E is acquired from the UI system device 34 is applied, as an example of the fifth reliability information 78E. The fact that such fifth reliability information 78E is associated with the editor information 68E means that the editor information 68E is not information obtained through the network 28.

In the present second embodiment, in the same manner as in a case where the acquisition step is automatically executed after the imaging step, the fifth reliability information 78E is automatically associated with the editor information 68E after the editing step. The reason for this is to prevent a time margin for the third party from creating the false reliability information 78 and from associating the false reliability information 78 with the editor information 68E.

The sixth reliability information 78F is information that can specify a source of the editing time point information 68F. In the present second embodiment, the editing time point information 68F is information that is acquired through the network 28. Thus, in the present second embodiment, the information indicating that the editing time point information 68F is acquired through the network 28 is applied, as an example of the sixth reliability information 78F. The fact that such sixth reliability information 78F is associated with the editing time point information 68F means that the editing time point information 68F is obtained through the network 28.

In the present second embodiment, in the same manner as in a case where the acquisition step is automatically executed after the imaging step, the sixth reliability information 78F is automatically associated with the editing time point information 68F after the editing step. The reason for this is to prevent a time margin for the third party from creating the false reliability information 78 and from associating the false reliability information 78 with the editing time point information 68F.

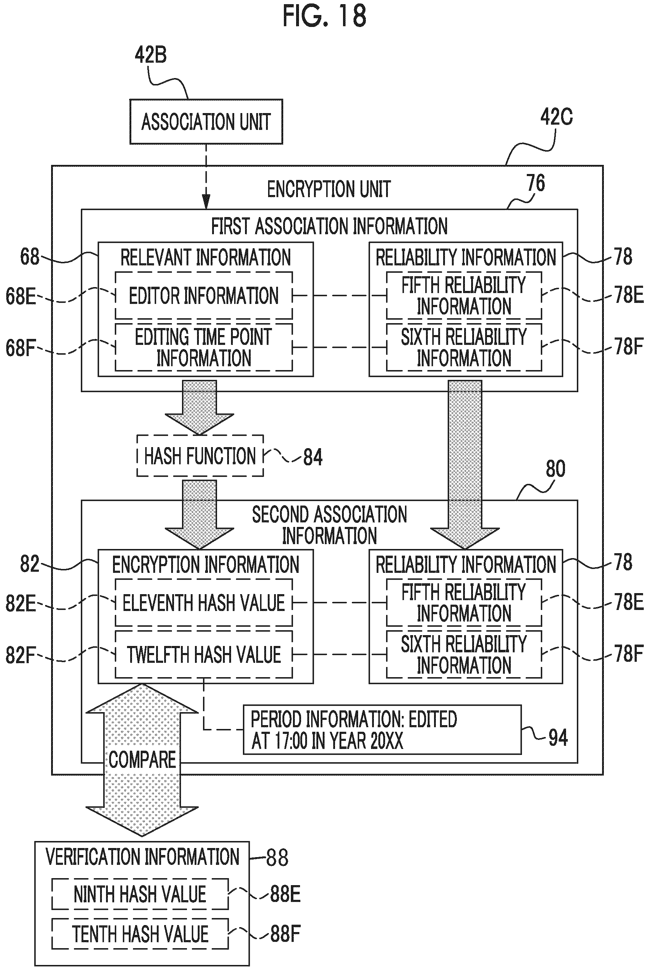

As shown in Fig. 18 as an example, in the same manner as the encryption (that is, hashing) described in the first embodiment, the encryption unit 42C performs the encryption on the editor information 68E and the editing time point information 68F using the hash function 84. Accordingly, the encryption information 82 includes eleventh hash value 82E obtained by encrypting the editor information 68E and twelfth hash value 82F obtained by encrypting the editing time point information 68F. The fifth reliability information 78E is associated with the eleventh hash value 82E, and the sixth reliability information 78F is associated with the twelfth hash value 82F.

In the encryption step, the encryption unit 42C generates period information 94, which is information related to a period in which the eleventh hash value 82E and the twelfth hash value 82F are generated, and includes the period information 94 in the second association information 80, as in the period information 86 of the first embodiment.

In the present second embodiment, the information generated by using the editing time point information 68F (refer to Figs. 16 and 17) is applied, as an example of the period information 94. An example of the timing at which the period information 94 is generated includes a timing at which the encryption (here, hashing as an example) of the relevant information 68 is ended.

The period information 94 includes information indicating that the eleventh hash value 82E and the twelfth hash value 82F are generated at the timing at which the image data 18 is edited, and the editing time point information 68F. The period information 94 may include the information indicating the total time required for the editing on the image data 18.

The period information 94 may be the editing time point information 68F itself. Further, the period information 94 may indicate a time point at a point in time at which the encryption of the eleventh hash value 82E and the twelfth hash value 82F are actually ended. In this case, for example, the period information 94 may be acquired by the encryption unit 42C, through the network 28, at a timing at which the encryption of the editor information 68E and the editing time point information 68F is ended, or may be acquired by the encryption unit 42C, from the real time clock built into the imaging apparatus 10, at the timing at which the encryption of the eleventh hash value 82E and the twelfth hash value 82F is ended.

In the present second embodiment, in the same manner as in a case where the fifth hash value 88A, the sixth hash value 88B, the seventh hash value 88C, and the eighth hash value 88D are generated as the information included in the verification information 88 in the first embodiment, a ninth hash value 88E and a tenth hash value 88F are generated as the information included in the verification information 88. The ninth hash value 88E is obtained by hashing the editor information 68E using the hash function 84, and the tenth hash value 88F is obtained by hashing the editing time point information 68F using the hash function 84.

Further, in the present second embodiment, in the same manner as the processing performed by the comparison unit 58C according to the first embodiment, the ninth hash value 88E is compared with the eleventh hash value 82E and the tenth hash value 88F is compared with the twelfth hash value 82F. In the same manner as the first embodiment, the comparison results are handled by the execution unit 58D according to the first embodiment.

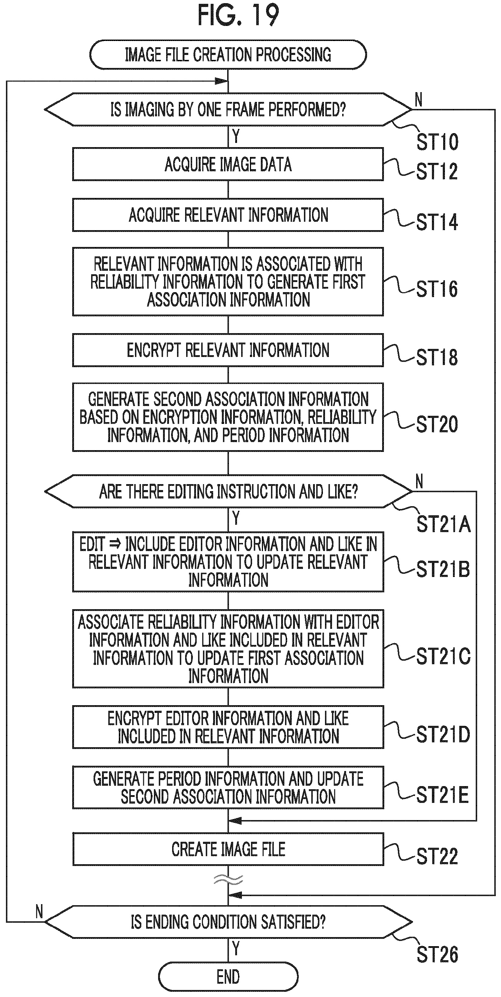

Fig. 19 shows an example of a flow of the image file creation processing according to the present second embodiment. A flowchart shown in Fig. 19 is different from the flowchart shown in Fig. 13 in that processing of step ST21A to step ST21E is inserted between the processing of step ST20 and the processing of step ST22. The processing of step ST21A to step ST21E will be described.

In step ST21A of the image file creation processing shown in Fig. 19, the editing unit 42F determines whether or not the UI system device 34 receives the editing instruction 92 and the editor information 68E. In step ST21A, in a case where the UI system device 34 does not receive the editing instruction 92 and the editor information 68E, negative determination is made, and the image file creation processing proceeds to step ST22. In step ST21A, in a case where the UI system device 34 receives the editing instruction 92 and the editor information 68E, positive determination is made, and the image file creation processing proceeds to step ST21B.

In step ST21B, the editing unit 42F edits the image data 18 acquired in step ST12 in response to the editing instruction 92 received by the UI system device 34 in step ST21A. Further, the editing unit 42F generates the editing time point information 68F by using the information obtained through the network 28. The editing unit 42F includes the editor information 68E, which is received by the UI system device 34 in step ST21A, and the editing time point information 68F in the relevant information 68 to update the relevant information 68. The processing of step ST21B is executed, and then the image file creation processing proceeds to step ST21C.

In step ST21C, the association unit 42B associates the fifth reliability information 78E with the editor information 68E and associates the sixth reliability information 78F with the editing time point information 68F to update the first association information 76. The processing of step ST21C is executed, and then the image file creation processing proceeds to step ST21D.

In step ST21D, the encryption unit 42C encrypts the editor information 68E and the editing time point information 68F, which are included in the relevant information 68, by using the hash function 84 to generate the eleventh hash value 82E and the twelfth hash value 82F. The processing of step ST21D is executed, and then the image file creation processing proceeds to step ST21E.

In step ST21E, the encryption unit 42C generates the period information 94. The encryption unit 42C updates the second association information 80 by using the eleventh hash value 82E, the twelfth hash value 82F, the fifth reliability information 78E, the sixth reliability information 78F, and the period information 94. That is, the update of the second association information 80 is realized by associating the fifth reliability information 78E with the eleventh hash value 82E, associating the sixth reliability information 78F with the twelfth hash value 82F, and associating the period information 94 with the encryption information 82. The processing of step ST21E is executed, and then the image file creation processing proceeds to step ST22.

As described above, in the present second embodiment, the imaging apparatus 10 edits the image data 18, and the relevant information 68 includes the editing-relevant information (here, the editor information 68E and the editing time point information 68F as an example). The editing-relevant information is encrypted. In the present second embodiment, the eleventh hash value 82E is generated by the encryption of the editor information 68E, and the twelfth hash value 82F is generated by the encryption of the editing time point information 68F. The eleventh hash value 82E and the twelfth hash value 82F are included in the encryption information 82. In the present second embodiment, the imaging apparatus 10 includes the period information 94 in the metadata 20. The period information 94 relates to the period in which the eleventh hash value 82E and the twelfth hash value 82F are generated.

Therefore, for example, in a case where the image file 16 is received from the editor (for example, the imaging person 14), the recipient 26 or the like can estimate the validity of the period in which the editing-relevant information is encrypted with reference to the period information 94 included in the metadata 20 of the image file 16. For example, in a case where the recipient 26 or the like feels the validity of the period in which the editing-relevant information is encrypted, the recipient 26 or the like can determine that the reliability of the editing-relevant information is high. On the contrary, in a case where the recipient 26 or the like feels abnormality in the period in which the editing-relevant information is encrypted, the recipient 26 or the like can determine that the reliability of the editing-relevant information is low. As described above, with the inclusion of the period information 94 in the metadata 20 of the image file 16, it is possible to improve the security of the editing-relevant information.

Further, the imaging apparatus 10 includes the reliability information 78 in the metadata 20, and the reliability information 78 includes the fifth reliability information 78E and the sixth reliability information 78F. The fifth reliability information 78E is information that can specify a source of the editor information 68E. The sixth reliability information 78F is information that can specify a source of the editing time point information 68F.

Therefore, for example, in a case where the image file 16 is received from the editor (for example, the imaging person 14), the recipient 26 or the like can determine the highness or lowness of the reliability of the editing-relevant information with reference to the fifth reliability information 78E and the sixth reliability information 78F included in the metadata 20 of the image file 16. As described above, with the inclusion of the fifth reliability information 78E and the sixth reliability information 78F in the metadata 20 of the image file 16, it is possible to improve the security of the editing-relevant information.

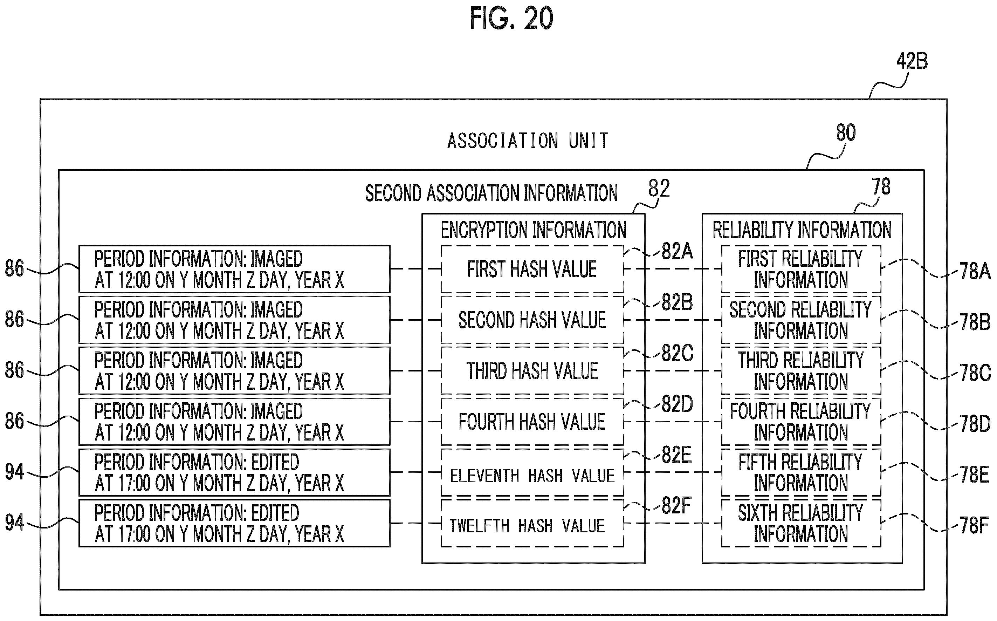

In the second embodiment, although the form example has been described in which the pieces of period information 86 and 94 are associated with the encryption information 82, this is merely an example. For example, as shown in Fig. 20, the period information 86 may be individually associated with the first hash value 82A, the second hash value 82B, the third hash value 82C, and the fourth hash value 82D, and the period information 94 may be individually associated with the eleventh hash value 82E and the twelfth hash value 82F. In the same manner as in the first and second embodiments, the second association information 80 configured in this manner is stored in the metadata 20.

As described above, in a case where the pieces of period information 86 and 94 are present, the metadata 20 can collectively store the encrypted information corresponding to the period information 86 and the encrypted information corresponding to the period information 94. That is, the metadata 20 can collectively store the first hash value 82A, the second hash value 82B, the third hash value 82C, and the fourth hash value 82D, which correspond to the period information 86, and the eleventh hash value 82E and the twelfth hash value 82F, which correspond to the period information 94. Accordingly, it is clarified, in the metadata 20, that the period information 86 corresponds to the first hash value 82A, the second hash value 82B, the third hash value 82C, and the fourth hash value 82D, and the period information 94 corresponds to the eleventh hash value 82E and the twelfth hash value 82F. As a result, it is easy to handle the first hash value 82A, the second hash value 82B, the third hash value 82C, the fourth hash value 82D, the eleventh hash value 82E, the twelfth hash value 82F, and the pieces of period information 86 and 94.

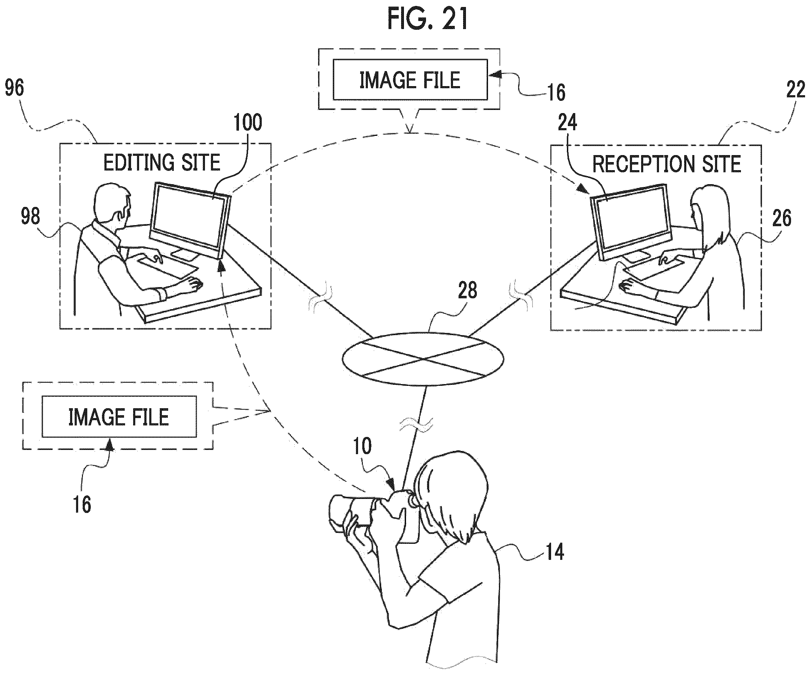

In the second embodiment, although the form example has been described in which the editing step is executed in the imaging apparatus 10, the technology of the present disclosure is not limited thereto. For example, the editing step may be executed by an editing apparatus 100 used by an editor 98 at an editing site 96, as shown in Fig. 21. An example of the editing apparatus 100 includes an apparatus having the same specification as the reception apparatus 24. In the same manner as the reception apparatus 24, the editing apparatus 100 is connected to the network 28. For example, the image file 16 is transmitted from the imaging apparatus 10 to the editing apparatus 100 via the network 28, and the image file 16 edited by the editing apparatus 100 is transmitted to the reception apparatus 24 via the network 28.

In a case where the editing step is executed by the editing apparatus 100 in this manner, the image file creation processing may be executed in a distributed manner by the imaging apparatus 10 and the editing apparatus 100. For example, the imaging apparatus 10 executes the image file creation processing shown in Fig. 13, and the editing apparatus 100 executes the processing of step ST21A to step ST26 included in the image file creation processing shown in Fig. 19. In this case, for example, a transmission destination of the image file 16 by the imaging apparatus 10 is the editing apparatus 100, and a transmission destination of the edited image file 16 by the editing apparatus 100 is the reception apparatus 24. Further, in a case where the editing step is executed by the editing apparatus 100, the image file reception processing may be performed by the editing apparatus 100.

In the second embodiment, although the form example has been described in which the non-allowable information 74 is not included in the editor information 68E and the editing time point information 68F, this is merely an example. In the same manner as in the first embodiment, the non-allowable information 74 may be included in the editor information 68E or the editing time point information 68F.

In the second embodiment, although the form example has been described in which the period information 94 is included in the second association information 80 as it is, this is merely an example. For example, in the same manner as in a case where the relevant information 68 is encrypted, the period information 94 may also be encrypted, and the information in which the period information 94 is encrypted may be included in the second association information 80. Further, in this case, the period information 94 before being encrypted may be included in the metadata 20 of the image file 16 as a part of the relevant information 68.

### [Third Embodiment]

In each of the above embodiments, the form example has been described in which the encryption information 82 is included in the metadata 20. However, in the present third embodiment, a form example will be described in which information obtained by further encrypting the encryption information 82 is included in the metadata 20. In the present third embodiment, the same reference numerals will be assigned to the same components as the components described in each of the above embodiment and description thereof will be omitted, and parts different from each of the above embodiment will be described.

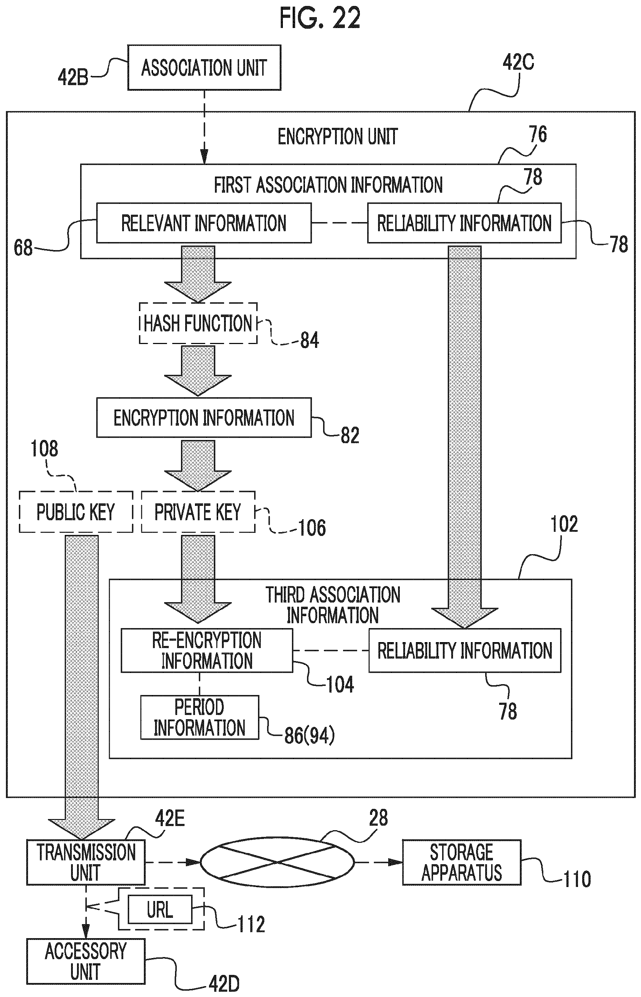

As shown in Fig. 22 as an example, the encryption unit 42C according to the present third embodiment is different from the encryption unit 42C described in each of the above embodiments in that third association information 102 is generated instead of the second association information 80. The third association information 102 is different from the second association information 80 in that re-encryption information 104 is included instead of the encryption information 82. The re-encryption information 104 is an example of "first encryption information" according to the technology of the present disclosure, and is generated based on the encryption information 82 (for example, the first hash value 82A, the second hash value 82B, the third hash value 82C, and the fourth hash value 82D).

The encryption unit 42C generates a private key 106 and generates a public key 108 corresponding to the private key 106. The transmission unit 42E acquires the public key 108. The transmission unit 42E transmits the public key 108 to a storage apparatus 110 on the network 28. The storage apparatus 110 receives the public key 108, which is transmitted from the transmission unit 42E, and stores the received public key 108. An example of the storage apparatus 110 includes a server or a personal computer that is communicably connected to the network 28.

The transmission unit 42E provides the accessory unit 42D with a URL 112 that can specify a place where the public key 108 is stored on the network 28 (for example, a place where the storage apparatus 110 stores the public key 108).

The encryption unit 42C encrypts the encryption information 82 using the private key 106 to generate the re-encryption information 104. For example, the re-encryption information 104 is information in which the first hash value 82A, the second hash value 82B, the third hash value 82C, the fourth hash value 82D, the eleventh hash value 82E, and the twelfth hash value 82F are encrypted, using the private key 106. The first hash value 82A, the second hash value 82B, the third hash value 82C, the fourth hash value 82D, the eleventh hash value 82E, and the twelfth hash value 82F are examples of "first hash value" according to the technology of the present disclosure.

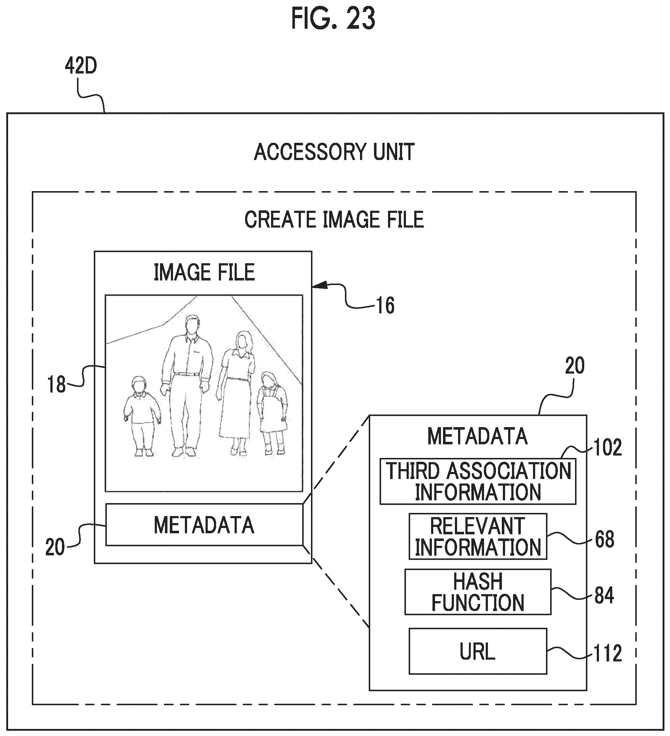

As shown in Fig. 23 as an example, the accessory unit 42D attaches the metadata 20 to the image data 18 to create the image file 16, as in each of the above embodiments. In the present third embodiment, the accessory unit 42D creates the image file 16 by using the image data 18, the relevant information 68, the hash function 84, the third association information 102, and the URL 112.

In the present third embodiment, the metadata 20 includes the relevant information 68 and the hash function 84. Further, in the present third embodiment, the metadata 20 includes the third association information 102 instead of the second association information 80. Furthermore, in the present third embodiment, the metadata 20 includes the URL 112 as the information required for acquiring the public key 108.

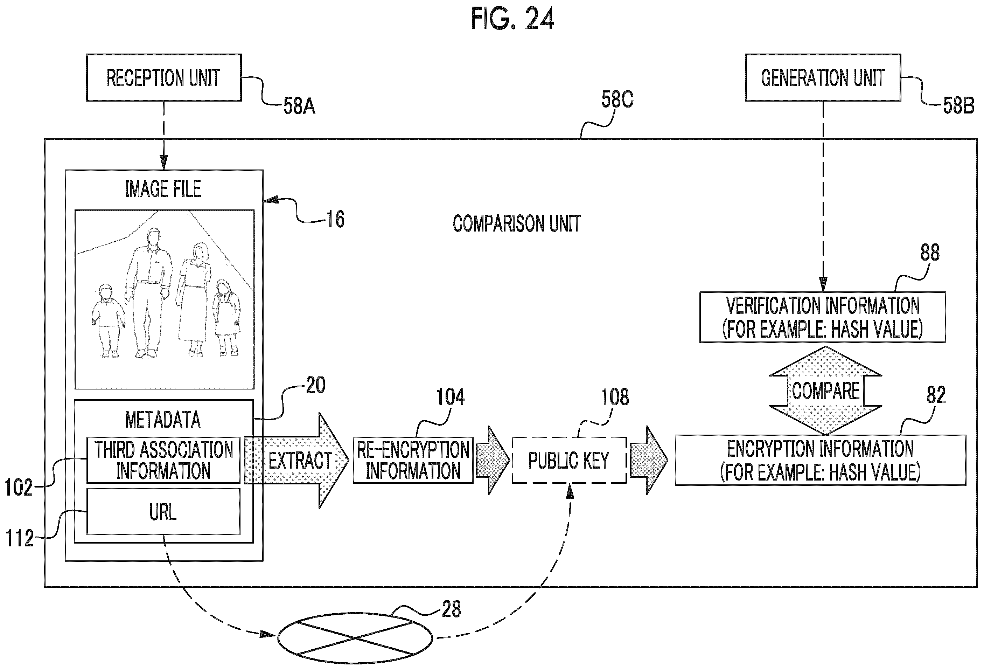

As shown in Fig. 24 as an example, the comparison unit 58C extracts the re-encryption information 104 from the third association information 102, which is included in the metadata 20 of the image file 16. Further, the comparison unit 58C acquires the public key 108 through the network 28 by using the URL 112, which is included in the metadata 20 of the image file 16. That is, the comparison unit 58C specifies, from the URL 112, a place where the public key 108 is stored on the network 28 (for example, a place where the storage apparatus 110 stores the public key 108), and acquires the public key 108 from the specified place.

The comparison unit 58C decrypts the re-encryption information 104 using the public key 108 to generate the encryption information 82 (for example, the first hash value 82A, the second hash value 82B, the third hash value 82C, the fourth hash value 82D, the eleventh hash value 82E, and the twelfth hash value 82F). The encryption information 82 obtained by decrypting the re-encryption information 104 using the public key 108 is "first information" according to the technology of the present disclosure. Further, the first hash value 82A, the second hash value 82B, the third hash value 82C, the fourth hash value 82D, the eleventh hash value 82E, and the twelfth hash value 82F, which are included in the encryption information 82 obtained by decrypting the re-encryption information 104 using the public key 108, are examples of "second hash value" according to the technology of the present disclosure.

The comparison unit 58C compares the verification information 88 with the encryption information 82, in the same manner as in each of the above embodiments. That is, the comparison unit 58C compares the fifth hash value 88A, the sixth hash value 88B, the seventh hash value 88C, the eighth hash value 88D, the ninth hash value 88E, and the tenth hash value 88F with the first hash value 82A, the second hash value 82B, the third hash value 82C, the fourth hash value 82D, the eleventh hash value 82E, and the twelfth hash value 82F.

As described above, in the present third embodiment, the comparison unit 58C compares the verification information 88 with the encryption information 82 generated based on the re-encryption information 104. Accordingly, it is possible to obtain the same effect as that of each of the above embodiments.

Further, in the present third embodiment, the re-encryption information 104 is information generated based on the encryption information 82, which is obtained by performing the hashing on the relevant information 68, and the private key 106. In other words, the re-encryption information 104 may be said to be information obtained by double encryption on the relevant information 68.

The re-encryption information 104 is included in the metadata 20 of the image file 16. The image file 16 is received and handled by the recipient 26, the editor 98, or the like, in the same manner as in each of the above embodiments. The information to be compared with the verification information 88 by the comparison unit 58C, in the reception apparatus 24 used by the recipient 26 or the editing apparatus 100 used by the editor 98, is the encryption information 82 generated by decrypting the re-encryption information 104 with the public key 108. Therefore, it is possible to specify whether or not the relevant information 68 has been modified, or the like, while ensuring a high level of security, as compared with a case where the relevant information 68 is simply hashed.

Further, in the present third embodiment, the comparison unit 58C uses the URL 112 in the metadata 20 of the image file 16 to acquire the public key 108 from the network 28. Therefore, it is possible to easily allow a legitimate user (for example, the recipient 26 or the editor 98) who handles the image file 16 to acquire the public key 108.

In the third embodiment, although the form example has been described in which the metadata 20 includes the URL 112, this is merely an example. The metadata 20 may include the public key 108. In this case, the legitimate user (for example, the recipient 26 or the editor 98) who handles the image file 16 can quickly obtain the public key 108.

### [Fourth Embodiment]

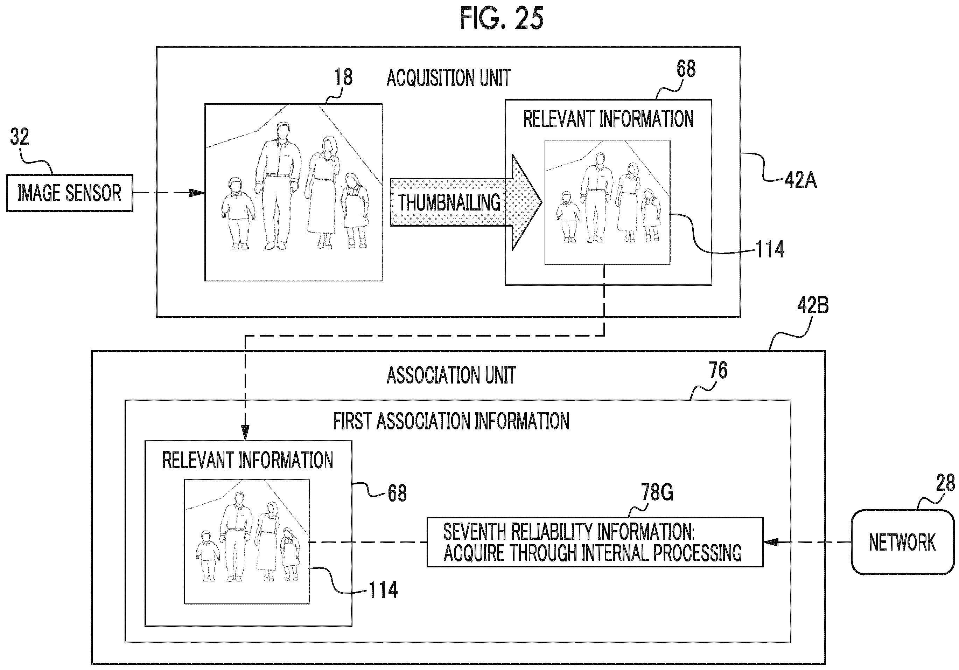

In each of the above embodiments, the form example has been described in which the relevant information 68 includes the imaging person information 68A, the imaging time point information 68B, the imaging apparatus position information 68C, the subject position information 68D, the editor information 68E, and the editing time point information 68F. In the present fourth embodiment, for example, a form example will be described in which the relevant information 68 also includes a thumbnail image 114, as shown in Fig. 25. In the fourth embodiment, the same reference numerals will be assigned to the same components as the components described in each of the above embodiment and description thereof will be omitted, and parts different from each of the above embodiment will be described.

As shown in Fig. 25 as an example, the acquisition unit 42A performs thumbnailing (that is, reduction) on the image data 18 to generate the thumbnail image 114. The acquisition unit 42A includes the thumbnail image 114 in the relevant information 68. The thumbnail image 114 is an example of "thumbnail image" according to the technology of the present disclosure.

The association unit 42B generates the first association information 76. In the first association information 76, seventh reliability information 78G is associated with the thumbnail image 114.

The seventh reliability information 78G is information that can specify a source of the thumbnail image 114. In the present fourth embodiment, the thumbnail image 114 is information that is acquired through the internal processing by the processor 42 (that is, processing of performing the thumbnailing on the image data 18 by the acquisition unit 42A). Thus, in the present fourth embodiment, the information indicating that the thumbnail image 114 is acquired through the internal processing by the processor 42 is applied, as an example of the seventh reliability information 78G The fact that such seventh reliability information 78G is associated with the thumbnail image 114 means that the thumbnail image 114 is not information obtained through the network 28.

Further, in the same manner as the association between the first reliability information 78A and the imaging person information 68A, the seventh reliability information 78G is also automatically associated with the thumbnail image 114 after the thumbnail image 114 is acquired through the internal processing by the processor 42.

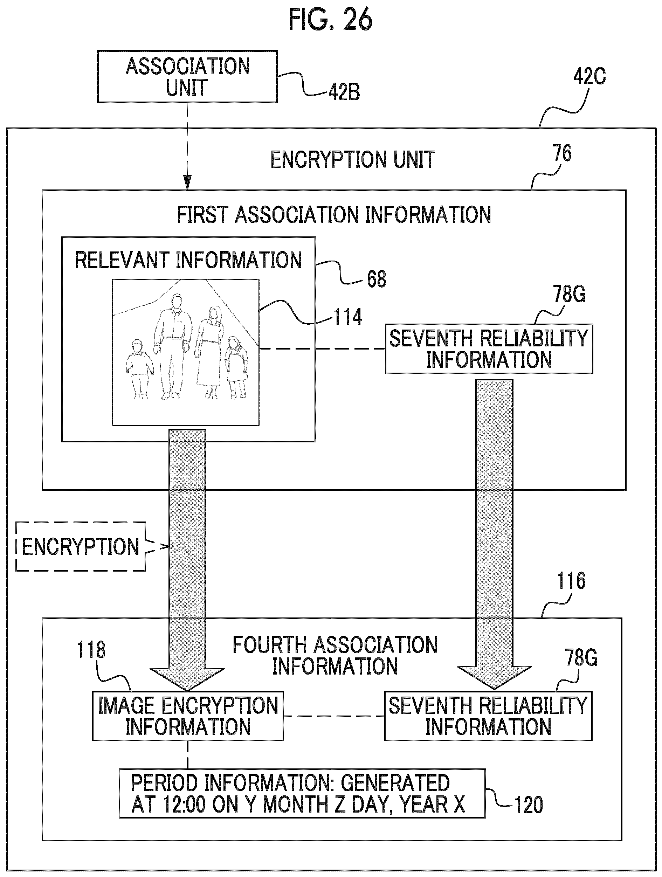

As shown in Fig. 26 as an example, the encryption unit 42C generates fourth association information 116. The fourth association information 116 includes image encryption information 118, the seventh reliability information 78G, and period information 120. The encryption unit 42C generates the image encryption information 118 by encrypting the thumbnail image 114 in the same manner as in each of the above embodiments, and includes the generated image encryption information 118 in the fourth association information 116. Further, the encryption unit 42C also includes the second association information 80 or the third association information 102 in the fourth association information 116.

The seventh reliability information 78G and the period information 120 are associated with the image encryption information 118. The period information 120 includes information indicating that the thumbnail image 114 is generated and information indicating a time point at which the thumbnail image 114 is generated.

As described above, in the present fourth embodiment, the fourth association information 116 including the image encryption information 118 (that is, information in which the thumbnail image 114 is encrypted) is included in the metadata 20 of the image file 16 in the same manner as in each of the above embodiments. In other words, the accessory unit 42D attaches the fourth association information 116, which includes the image encryption information 118, to the image data 18 as the metadata 20 to create the image file 16. Accordingly, it is possible to improve the security of the thumbnail image 114.

In the fourth embodiment, although the form example has been described in which the relevant information 68 includes the thumbnail image 114, the technology of the present disclosure is not limited thereto. The relevant information 68 may include text information. In this case as well, since the text information is encrypted and included in the metadata 20 of the image file 16 in the same manner as in each of the above embodiments, it is possible to improve the security of the text information.

Further, the thumbnail image 114 may be an image that is not changed with a change in the image data 18 (for example, editing by the editing unit 42F). In this case, it is possible to improve the security of the thumbnail image 114 that is not changed according to the change in the image data 18.

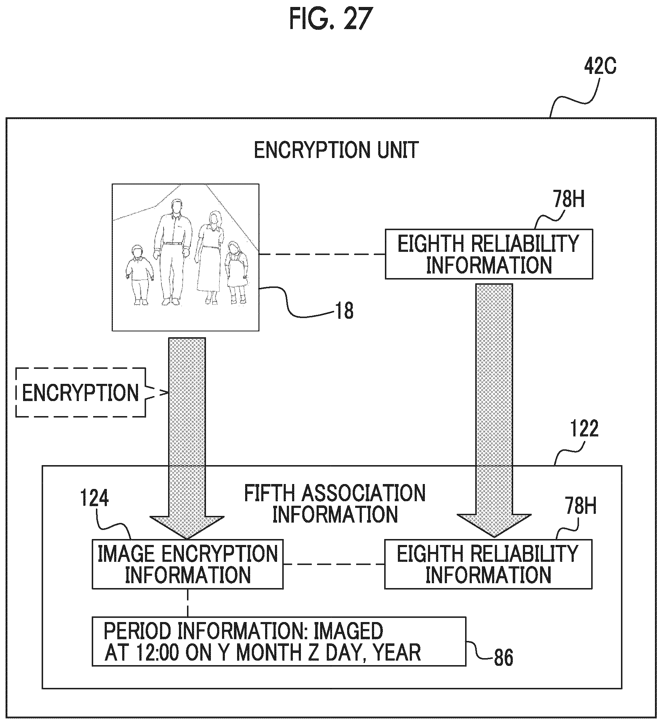

In the fourth embodiment, although the form example has been described in which the fourth association information 116 includes the image encryption information 118 in which the thumbnail image 114 is encrypted, the technology of the present disclosure is not limited thereto. For example, as shown in Fig. 27, the encryption unit 42C may generate fifth association information 122 and include image encryption information 124 in the fifth association information 122. The image encryption information 124 is information that is generated by encrypting the image data 18. The image encryption information 124 is an example of "second encryption information" according to the technology of the present disclosure.

The fifth association information 122 also includes the second association information 80, the third association information 102, or the fourth association information 116. Eighth reliability information 78H and the period information 86 are associated with the fifth association information 122. The eighth reliability information 78H is information that can specify a source of the image data 18. The eighth reliability information 78H includes information indicating that the imaging for obtaining the image data 18 is performed, and information corresponding to the imaging time point information 68B (refer to Fig. 5).

The fifth association information 122 including the image encryption information 124 (that is, information in which the image data 18 is encrypted) as described above is included in the metadata 20 of the image file 16 in the same manner as in each of the above embodiments. In other words, the accessory unit 42D attaches the fifth association information 122 including the image encryption information 124 to the image data 18 as the metadata 20 to create the image file 16. Accordingly, it is possible to improve the security of the image data 18.

### [Other Modification Examples]

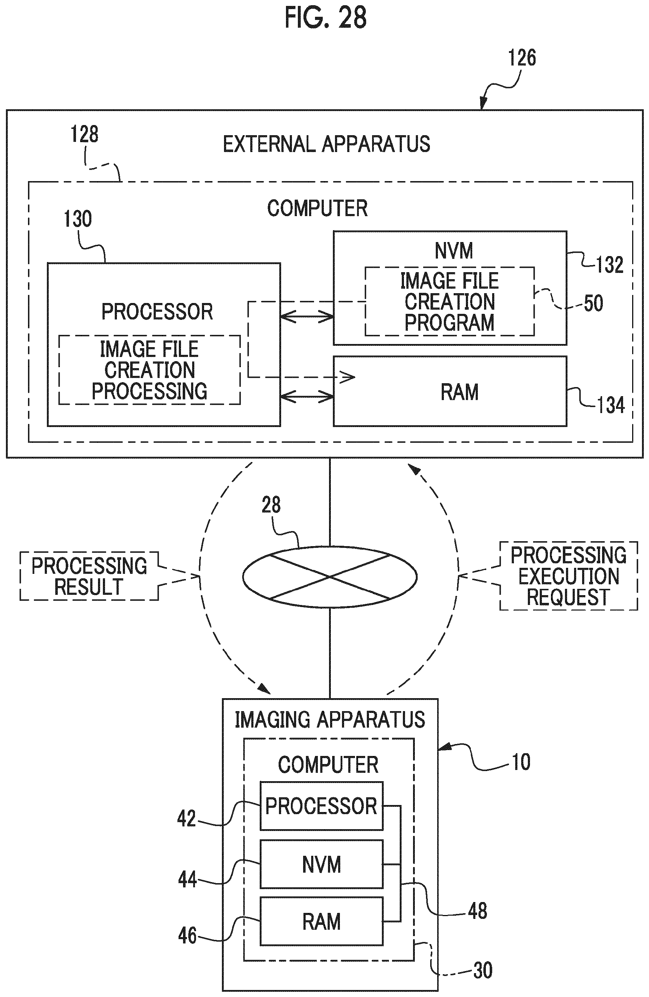

In each of the above embodiments, although the form example has been described in which the computer 30 in the imaging apparatus 10 executes the image file creation processing, the technology of the present disclosure is not limited thereto. For example, as shown in Fig. 28, the image file creation processing may be executed by a computer 128 in an external device 126, which is communicably connected to the imaging apparatus 10 via the network 28. An example of the computer 128 includes a server computer for cloud service. The computer 128 is an example of "information creation apparatus" and "computer" according to the technology of the present disclosure.

In the example shown in Fig. 28, the computer 128 comprises a processor 130, an NVM 132, and a RAM 134. The NVM 132 stores the image file creation program 50.

The imaging apparatus 10 requests, via the network 28, the external apparatus 126 to execute the image file creation processing. In response to this, the processor 130 of the external apparatus 126 reads out the image file creation program 50 from the NVM 132, and executes the image file creation program 50 on the RAM 134. The processor 130 performs the image file creation processing in accordance with the image file creation program 50 executed on the RAM 134. The processor 130 provides the imaging apparatus 10 with a processing result obtained by executing the image file creation processing via the network 28.

Fig. 28 shows the form example in which the external apparatus 126 executes the image file creation processing, but this is merely an example. For example, the imaging apparatus 10 and the external apparatus 126 may execute the image file creation processing in a distributed manner, or a plurality of apparatuses including the imaging apparatus 10 and the external apparatus 126 may execute the image file creation processing in a distributed manner.

Further, in the example shown in Fig. 28, although the form example has been described in which the processor 130 of the external apparatus 126 performs the image file creation processing, the technology of the present disclosure is not limited thereto. For example, in the same manner as in a case where the processor 130 performs the image file creation processing, the processor 130 may perform the image file reception processing in response to a request from the reception apparatus 24.

In each of the above embodiments, although the form example has been described in which the NVM 44 stores the image file creation program 50, the technology of the present disclosure is not limited thereto. For example, the image file creation program 50 may be stored in a portable computer-readable non-transitory storage medium, such as a solid state drive (SSD), a USB memory, or a magnetic tape. The image file creation program 50 stored in the non-transitory storage medium is installed in the imaging apparatus 10. The processor 42 executes image file creation processing in accordance with the image file creation program 50.

Further, the image file creation program 50 may be stored, via a network, in a storage device of another computer, a server device, or the like, which is connected to the imaging apparatus 10, may be downloaded in response to a request of the imaging apparatus 10, and may be installed in the imaging apparatus 10.

There is no need to store the entire image file creation program 50 in the storage device of another computer, a server device, or the like, which is connected to the imaging apparatus 10, or the NVM 44, and a part of the image file creation program 50 may be stored.

Further, although the computer 30 is built into the imaging apparatus 10 shown in Fig. 3, the technology of the present disclosure is not limited thereto. For example, the computer 30 may be provided outside the imaging apparatus 10.

In each of the above embodiments, although the form example has been described in which the technology of the present disclosure is realized by the software configuration, the technology of the present disclosure is not limited thereto. A device including an application specific integrated circuit (ASIC), a field programmable gate array (FPGA), or a programmable logic device (PLD) may be applied. Moreover, a combination of the hardware configuration and the software configuration may be used.

As a hardware resource for executing the image file creation processing described in each of the above embodiments, various processors shown below can be used. Examples of the processor include software, that is, a CPU, which is a general-purpose processor that executes a program to function as the hardware resource for executing the image file creation processing. Further, examples of the processor include a dedicated electronic circuit which is a processor having a circuit configuration designed to be dedicated to execute specific processing, such as the FPGA, the PLD, or the ASIC. A memory is built into or connected to any processor, and any processor uses the memory to execute the image file creation processing.

The hardware resource for executing the image file creation processing may be configured with one of these various processors or may be configured with a combination of two or more processors of the same type or different types (for example, a combination of a plurality of FPGAs or a combination of a CPU and an FPGA). Further, the hardware resource for executing the image file creation processing may be one processor.

As an example of configuring with one processor, first, one processor is configured with a combination of one or more CPUs and software, and there is an embodiment in which this processor functions as the hardware resource for executing the image file creation processing. Second, as represented by System-on-a-chip (SoC) or the like, there is a form in which a processor that realizes all functions of a system including a plurality of hardware resources for executing the image file creation processing into one integrated circuit (IC) chip is used. As described above, the image file creation processing is realized by using one or more of the various processors as the hardware resource.

Furthermore, as the hardware structure of these various processors, more specifically, it is possible to use an electronic circuit in which circuit elements, such as semiconductor elements, are composited. Further, the image file creation processing described above is merely an example. Therefore, it is needless to say that removal of an unnecessary step, addition of a new step, and change of processing procedure may be employed within a range not departing from the gist.

Although the image file creation processing performed by the imaging apparatus 10 has been described, the same applies to the image file creation processing performed by the reception apparatus 24.

The contents described and the contents shown hereinabove are specific descriptions regarding the part according to the technique of the present disclosure and are merely examples of the technique of the present disclosure. For example, the descriptions regarding the configurations, the functions, the actions, and the effects are descriptions regarding an example of the configurations, the functions, the actions, and the effects of the part according to the technology of the present disclosure. Accordingly, in the contents described and the contents shown hereinabove, it is needless to say that removal of an unnecessary part, or addition or replacement of a new element may be employed within a range not departing from the gist of the present technology of the present disclosure. In order to avoid complication and easily understand the part according to the technique of the present disclosure, in the contents described and the contents shown hereinabove, the description regarding common general technical knowledge or the like which is not necessarily particularly described for enabling implementation of the technique of the present disclosure is omitted.

In the present specification, the grammatical concept of "A or B" includes the concept of "any one of A or B" as well as the concept synonymous with "at least one of A or B". That is, "A or B" includes meaning that it may be only A, only B, or a combination of A and B. In the present specification, in a case where three or more matters are represented by "or" in combination, the same concept as "A or B" is applied.

In a case where all of documents, patent applications, and technical standard described in the specification are built into the specification as references, to the same degree as a case where the incorporation of each of documents, patent applications, and technical standard as references is specifically and individually noted.

The following Supplementary Notes are further disclosed with respect to the above embodiment.

### (Supplementary Note 1)

An information creation method comprising:
an acquisition step of acquiring relevant information related to image data;
an encryption step of generating first encryption information by encrypting the relevant information; and
an accessory step of attaching the first encryption information to the image data as accessory information,
in which the accessory information includes period information, which is related to a period in which the first encryption information is generated, or reliability information.

### (Supplementary Note 2)

An information creation method comprising:
an acquisition step of acquiring relevant information related to image data;
an encryption step of generating first encryption information by encrypting the relevant information; and
an accessory step of attaching accessory information directly or indirectly to the image data,
in which the accessory information includes the first encryption information and period information, which is related to a period in which the first encryption information is generated, or reliability information.

### (Supplementary Note 3)

The information creation method according to Supplementary Note 1 or 2,
in which the reliability information is information related to whether or not the relevant information is information obtained through a network.

### (Supplementary Note 4)

The information creation method according to any one of Supplementary Notes 1 to 3, in which the accessory information includes a plurality of pieces of the first encryption information having different pieces of the period information.

### (Supplementary Note 5)

The information creation method according to any one of Supplementary Notes 1 to 4, in which the accessory step includes a creation step of creating an image file including the relevant information and the first encryption information.

### (Supplementary Note 6)

The information creation method according to any one of Supplementary Notes 1 to 5,
in which the relevant information includes information indicating that modification or deletion is not allowed.

### (Supplementary Note 7)

The information creation method according to any one of Supplementary Notes 1 to 6,
in which the relevant information includes text information or a thumbnail image.

### (Supplementary Note 8)

The information creation method according to Supplementary Note 7,
in which the thumbnail image is an image that is not changed according to a change in the image data.

### (Supplementary Note 9)

The information creation method according to any one of Supplementary Notes 1 to 8,
in which, in the encryption step, the relevant information is subjected to hashing to generate the first encryption information, and
the accessory information includes a hash function used for the hashing.

### (Supplementary Note 10)

An information creation method according to Supplementary Note 9, further comprising:
a generation step of generating verification information by using the relevant information and the hash function; and
a comparison step of comparing the verification information with the first encryption information or first information generated based on the first encryption information.

### (Supplementary Note 11)

The information creation method according to Supplementary Note 10,
in which, in a case where the first information is generated based on the first encryption information,
the first encryption information is information generated based on a first hash value obtained by performing the hashing on the relevant information and a private key, and
the first information is a second hash value generated based on the first encryption information and a public key.

### (Supplementary Note 12)

The information creation method according to Supplementary Note 11,
in which the accessory information includes the public key or information required for acquiring the public key.

### (Supplementary Note 13)

The information creation method according to any one of Supplementary Notes 1 to 12,
in which the encryption step is automatically executed after the acquisition step.

### (Supplementary Note 14)

The information creation method according to Supplementary Note 13,
in which the acquisition step is automatically executed after the image data is acquired.

### (Supplementary Note 15)

The information creation method according to Supplementary Note 14, further comprising:
an imaging step of performing imaging to acquire the image data,
in which the acquisition step is automatically executed after the imaging step.

### (Supplementary Note 16)

The information creation method according to any one of Supplementary Notes 1 to 15,
in which the relevant information includes imaging person information, imaging time information, imaging apparatus position information, or subject position information.

### (Supplementary Note 17)

The information creation method according to any one of Supplementary Notes 1 to 16,
in which, in the encryption step, second encryption information obtained by encrypting the image data is generated, and
in the accessory step, the second encryption information is attached to the image data as the accessory information.

### (Supplementary Note 18)

The information creation method according to any one of Supplementary Notes 1 to 17,
in which, in the accessory step, the accessory information is recorded on a recording medium and access information to the accessory information is recorded in an image file including the image data to indirectly attach the accessory information to the image data.

### (Supplementary Note 19)

An image file comprising:
accessory information of image data,
in which the accessory information includes
first encryption information obtained by encrypting relevant information related to the image data, and
period information, which is related to a period in which the first encryption information is generated, or reliability information.

## Claims

1. An information creation method comprising:
an acquisition step of acquiring relevant information related to image data;
an encryption step of generating first encryption information by encrypting the relevant information; and
an accessory step attaching accessory information directly or indirectly to the image data,
wherein the accessory information includes the first encryption information and period information, which is related to a period in which the first encryption information is generated, or reliability information.

2. The information creation method according to claim 1,
wherein the reliability information is information related to whether or not the relevant information is information obtained through a network.

3. The information creation method according to claim 1,
wherein the accessory information includes a plurality of pieces of the first encryption information having different pieces of the period information.

4. The information creation method according to claim 1,
wherein the accessory step includes a creation step of creating an image file including the relevant information and the first encryption information.

5. The information creation method according to claim 1,
wherein the relevant information includes information indicating that modification or deletion is not allowed.

6. The information creation method according to claim 1,
wherein the relevant information includes text information or a thumbnail image.

7. The information creation method according to claim 6,
wherein the thumbnail image is an image that is not changed according to a change in the image data.

8. The information creation method according to claim 1,
wherein, in the encryption step, the relevant information is subjected to hashing to generate the first encryption information, and
the accessory information includes a hash function used for the hashing.

9. The information creation method according to claim 8, further comprising:
a generation step of generating verification information by using the relevant information and the hash function; and
a comparison step of comparing the verification information with the first encryption information or first information generated based on the first encryption information.

10. The information creation method according to claim 9,
wherein, in a case where the first information is generated based on the first encryption information,
the first encryption information is information generated based on a first hash value obtained by performing the hashing on the relevant information and a private key, and
the first information is a second hash value generated based on the first encryption information and a public key.

11. The information creation method according to claim 10,
wherein the accessory information includes the public key or information required for acquiring the public key.

12. The information creation method according to claim 1,
wherein the encryption step is automatically executed after the acquisition step.

13. The information creation method according to claim 12,
wherein the acquisition step is automatically executed after the image data is acquired.

14. The information creation method according to claim 13, further comprising:
an imaging step of performing imaging to acquire the image data,
wherein the acquisition step is automatically executed after the imaging step.

15. The information creation method according to claim 1,
wherein the relevant information includes imaging person information, imaging time information, imaging apparatus position information, or subject position information.

16. The information creation method according to claim 1,
wherein, in the encryption step, second encryption information obtained by encrypting the image data is generated, and
in the accessory step, the second encryption information is attached to the image data as the accessory information.

17. The information creation method according to claim 1,
wherein, in the accessory step, the accessory information is recorded on a recording medium and access information to the accessory information is recorded in an image file including the image data to indirectly attach the accessory information to the image data.

18. An image file comprising:
accessory information of image data,
wherein the accessory information includes
first encryption information obtained by encrypting relevant information related to the image data, and
period information, which is related to a period in which the first encryption information is generated, or reliability information.

19. An information creation apparatus comprising:
a processor,
wherein the processor is configured to:
acquire relevant information related to image data;
generate first encryption information by encrypting the relevant information; and
attach accessory information directly or indirectly to the image data, and
the accessory information includes the first encryption information and period information, which is related to a period in which the first encryption information is generated, or reliability information.

20. A program for causing a computer to execute a process, the process comprising:
an acquisition step of acquiring relevant information related to image data;
an encryption step of generating first encryption information by encrypting the relevant information; and
an accessory step of attaching accessory information directly or indirectly to the image data,
wherein the accessory information includes the first encryption information and period information, which is related to a period in which the first encryption information is generated, or reliability information.
